# EUROPÄISCHE PATENTSCHRIFT

(11) **EP 3 144 867 B1**
(45) Veröffentlichungstag und Bekanntmachung des Hinweises auf die Patenterteilung: **17.06.2020**
(21) Anmeldenummer: 15002739.9
(22) Anmeldetag: 21.09.2015
(51) Int. Cl.: G06Q 30/02, G07B 15/06, G07C 5/00

(54) **POSITIONSDATENÜBERMITTLUNGSSYSTEM, FAHRZEUGEINRICHTUNG UND POSITIONSDATENÜBERMITTLUNGSVERFAHREN**
POSITION DATA TRANSMITTING SYSTEM, ON-VEHICLE DEVICE AND POSITION DATA TRANSMITTING METHOD
SYSTEME DE DETERMINATION DE DONNEES DE POSITION, DISPOSITIF DE VEHICULE ET PROCEDE DE DETERMINATION DE DONNEES DE POSITION

(43) Veröffentlichungstag der Anmeldung: 22.03.2017
(73) Patentinhaber: Toll Collect GmbH, 10785 Berlin (DE)
(72) Erfinder: Lohfelder, Thomas, 15834 Rangsdorf (DE); Krug, Robert, 14129 Berlin (DE)

(56) Entgegenhaltungen:
- US-A1- 2004 054 444
- US-A1- 2013 345 903

## Beschreibung

Die Erfindung betrifft ein Positionsdatenübermittlungssystem, eine Fahrzeugeinrichtung, eine zentrale Datenverarbeitungseinrichtung und ein Positionsdatenübermittlungsverfahren nach den Oberbegriffen der unabhängigen Ansprüche.

Positionsdatenübermittlungssysteme, Fahrzeugeinrichtungen, zentrale Datenverarbeitungseinrichtungen und Positionsdatenübermittlungsverfahren nach den Oberbegriffen der unabhängigen Ansprüche sind beispielsweise aus den Offenlegungsschriften WO 2008 000 227 A1, WO 2009 001 303 A1, EP 2 320 386 A1 und EP 1 909 231 A1 zumindest teilweise bekannt.

Aus der Offenlegungsschrift US 2013 0 345 903 A1 ist ein Datenübermittlungssystem zur Übermittlung von Daten eines Fahrzeugs an eine zentrale Datenverarbeitungseinrichtung bekannt, in dem die zentrale Datenverarbeitungseinrichtung an das Fahrzeug eine Aufforderung zur Übermittlung von Daten zusammen mit einer Wartezeitinformation sendet, die in Abhängigkeit von einer Arbeitsauslastung der zentralen Datenverarbeitungseinrichtung und von einer Arbeitsauslastung einer mit der Datenerfassung beschäftigten Fahrzeugkomponente festgelegt wird.

Aus der Offenlegungsschrift US 2004 0 054 444 A1 ist ein Positionsdatenübermittlungssystem zur Übermittlung von Positionsdaten eines Fahrzeugs an eine zentrale Datenverarbeitungseinrichtung bekannt, in dem das Fahrzeug bei Überschreiten einer vorgegebenen Speicherauslastung eine Anfrage nach einer Übermittlung der gespeicherten Daten an die zentrale Datenverarbeitungseinrichtung sendet.

In Systemen, in denen mehrere Fahrzeugeinrichtungen Positionsdaten an eine zentrale Datenverarbeitungseinrichtung senden, die dazu ausgebildet ist, die empfangenen Positionsdaten zu verarbeiten und wenigstens ein aus der Verarbeitung der empfangenen Positionsdaten resultierendes Verarbeitungsergebnis zu erzeugen, besteht das Problem, dass es dann zu Überlastszenarien in der zentralen Datenverarbeitungseinrichtung kommen kann, die einer DDOS (Distributed Denial-Of-Service) Attacke gleichen, wenn zu viele Fahrzeugeinrichtungen innerhalb eines zu kurzen Zeitabschnittes ihre sämtlichen Positionsdaten übermitteln oder zumindest den Versuch dazu unternehmen.

Die Aufgabe der Erfindung besteht darin, ein Positionsdatenübermittlungssystem, eine Fahrzeugeinrichtung, eine zentrale Datenverarbeitungseinrichtung und ein Positionsdatenübermittlungsverfahren bereitzustellen, mit denen derartige Überlastszenarien zuverlässig vermieden werden können.

Erfindungsgemäß wird diese Aufgabe durch ein Positionsdatenübermittlungssystem, eine Fahrzeugeinrichtung, eine zentrale Datenverarbeitungseinrichtung und ein Positionsdatenübermittlungsverfahren nach den unabhängigen Ansprüchen gelöst.

Vorteilhafte Weiterbildungen der Erfindungsgegenstände sind Gegenstand der abhängigen Ansprüche, wobei Vorteile und Merkmale von Ausführungsformen, -beispielen und Weiterbildungen des Erfindungsgegenstandes einer Erfindungskategorie als übertragbar auf jeden Erfindungsgegenstand jeder anderen Erfindungskategorie gelten, soweit dies technisch möglich ist.

Zusammengefasst werden mit der Erfindung ein Verfahren zur Positionsdatenübermittlung in einem Positionsdatenübermittlungssystem mit mehreren Fahrzeugeinrichtungen und einer zentralen Datenverarbeitungseinrichtung sowie ein korrespondierendes Positionsdatenübermitttungssystem vorgeschlagen, in denen eine Fahrzeugeinrichtung, bevor sie ihre Positionsdaten an die zentrale Datenverarbeitungseinrichtung versendet, zunächst eine für ihre dezentrale Speicherauslastung indikative dezentrale Statusinformation an die zentrale Datenverarbeitungseinrichtung übermittelt. Anhand dieser dezentralen Statusinformation und einer zentralen Statusinformation, die indikativ für die zentrale Auslastung der zentralen Datenverarbeitungseinrichtung ist, bestimmt die zentrale Datenverarbeitungseinrichtung den Umfang an Positionsdaten, die von der Fahrzeugeinrichtung zu versenden sind und sendet diesen bestimmten Umfang an die Fahrzeugeinrichtung, die sodann die Positionsdaten im bestimmten Umfang an die zentrale Datenverarbeitungseinrichtung versendet.

Gemäß einem ersten Aspekt der Erfindung wird ein Positionsdatenübermittlungssystem bereitgestellt, das eine Mehrzahl von jeweils von einem Fahrzeug mitgeführten Fahrzeugeinrichtungen, die jeweils wenigstens einen dezentralen Prozessor zum Verarbeiten von Daten, wenigstens einen dezentralen Datenspeicher zum zumindest zeitweisen Speichern von Daten und wenigstens eine dezentrale Kommunikationseinrichtung zum dezentralseitigen Versand und Empfang von Daten aufweisen, und wenigstens eine zentrale Datenverarbeitungseinrichtung mit wenigstens einem zentralen Prozessor zum Verarbeiten von Daten, wenigstens einem zentralen Datenspeicher zum zumindest zeitweisen Speichern von Daten und wenigstens einer zentralen Kommunikationseinrichtung zum zentralseitigen Empfang und Versand von Daten umfasst, wobei jede Fahrzeugeinrichtung ausgebildet ist, (a) Positionsdaten von mehreren zeitlich aufeinanderfolgend bestimmten Positionen ihres jeweiligen Fahrzeugs mittels des dezentralen Prozessors aufgrund von in der Fahrzeugeinrichtung gespeicherten positionsdatenspezifischen Anweisungen zu empfangen, zu erzeugen und/ oder zu verarbeiten und zumindest zeitweise in dem dezentralen Datenspeicher zu speichern, und (b) in dem dezentralen Datenspeicher zumindest zeitweise gespeicherte Positionsdaten mittels der dezentralen Kommunikationseinrichtung an die zentrale Datenverarbeitungseinrichtung zu versenden, und die zentrale Datenverarbeitungseinrichtung ausgebildet ist, (c) jeweils von einer Fahrzeugeinrichtung versendete Positionsdaten zentralseitig mittels der zentralen Kommunikationseinrichtung zu empfangen und zumindest bis zu einer Verarbeitung durch den zentralen Prozessor im zentralen Datenspeicher zu speichern, (d) die empfangenen Positionsdaten mittels des zentralen Prozessors zu verarbeiten und wenigstens ein aus der Verarbeitung der empfangenen Positionsdaten resultierendes Verarbeitungsergebnis zu erzeugen, und dadurch gekennzeichnet ist, dass jede Fahrzeugeinrichtung ausgebildet ist, (e) zu wenigstens einem definierten Anlass wenigstens eine von der dezentralen Speicherauslastung ihres jeweiligen dezentralen Datenspeichers abhängige dezentrale Statusinformation mittels der dezentralen Kommunikationseinrichtung an die zentrale Datenverarbeitungseinrichtung zu versenden, die zentrale Datenverarbeitungseinrichtung ausgebildet ist, (f) die dezentrale Statusinformation von der jeweiligen Fahrzeugeinrichtung zu empfangen, (g) wenigstens eine von der zentralen Auslastung der zentralen Datenverarbeitungseinrichtung abhängige zentrale Statusinformation zu erzeugen, (h) anhand der von einer jeweiligen Fahrzeugeinrichtung empfangenen dezentralen Statusinformation und der erzeugten zentralen Statusinformation einen Umfang an von der jeweiligen Fahrzeugeinrichtung an die zentrale Datenverarbeitungseinrichtung zu übermittelnden Positionsdaten zu bestimmen, und (i) eine Übermittlungsanweisung mit dem bestimmten Umfang an die jeweilige Fahrzeugeinrichtung zu versenden, von der sie die dezentrale Statusinformation empfangen hat, und schließlich jede Fahrzeugeinrichtung ausgebildet ist, (j) die Übermittlungsanweisung von der zentralen Datenverarbeitungseinrichtung mittels der dezentralen Kommunikationseinrichtung zu empfangen und (k) von der dezentralen Menge an in ihrem jeweiligen dezentralen Datenspeicher zum Versand an die zentrale Datenverarbeitungseinrichtung gespeicherten Positionsdaten den in der empfangenen Übermittlungsanweisung spezifizierten Umfang mittels der dezentralen Kommunikationseinrichtung an die zentrale Datenverarbeitungseinrichtung zu versenden.

Ein Beispiel für eine für die dezentrale Speicherauslastung ihres jeweiligen dezentralen Datenspeichers indikative dezentrale Statusinformation ist eine dezentrale Statusinformation, die abhängig von der dezentralen Speicherauslastung ihres jeweiligen dezentralen Datenspeichers ist.
Ein anderes Beispiel für eine für die dezentrale Speicherauslastung ihres jeweiligen dezentralen Datenspeichers indikative dezentrale Statusinformation ist eine dezentrale Statusinformation, die einen Absolutwert oder einen Relativwert der dezentralen Speicherauslastung ihres jeweiligen dezentralen Datenspeichers repräsentiert.

Die dezentrale Speicherauslastung kann absolut, beispielsweise eine Menge an in dem dezentralen Datenspeicher der jeweiligen Fahrzeugeinrichtung zum Versand an die zentrale Datenverarbeitungseinrichtung gespeicherten Positionsdaten, sein.
Die dezentrale Speicherauslastung kann relativ, beispielsweise ein Verhältnis der Menge an in dem dezentralen Datenspeicher der jeweiligen Fahrzeugeinrichtung zum Versand an die zentrale Datenverarbeitungseinrichtung gespeicherten Positionsdaten zu einem für die Speicherung von zum Versand an die zentrale Datenverarbeitungseinrichtung vorgesehenen Positionsdaten reservierten oder zur Verfügung stehenden Speicherplatz in dem dezentralen Datenspeicher der jeweiligen Fahrzeugeinrichtung, sein.
Insbesondere ist jede Fahrzeugeinrichtung ausgebildet, zu dem wenigstens einen definierten Anlass wenigstens eine dezentrale Statusinformation mittels der dezentralen Kommunikationseinrichtung an die zentrale Datenverarbeitungseinrichtung zu versenden, die indikativ ist für eine dezentrale Speicherauslastung ihres jeweiligen dezentralen Datenspeichers hinsichtlich der Speicherung von zum Versand an die zentrale Datenverarbeitungseinrichtung vorgesehenen Positionsdaten.
Beispielsweise kann die dezentrale Statusinformation abhängig sein von der dezentralen Menge an in dem dezentralen Datenspeicher der jeweiligen Fahrzeugeinrichtung zum Versand an die zentrale Datenverarbeitungseinrichtung gespeicherten Positionsdaten, was auch bedeutet, dass die dezentrale Statusinformation dieser dezentralen Menge entsprechen kann.
Beispiele für den Inhalt einer dezentralen Statusinformation oder dieser dezentralen Statusinformation selbst sind (a) eine Anzahl oder Datenmenge der Positionen von in dem dezentralen Datenspeicher der jeweiligen Fahrzeugeinrichtung zum Versand an die zentrale Datenverarbeitungseinrichtung zeitweise gespeicherten Positionsdaten, (b) eine Anzahl von in dem dezentralen Datenspeicher der jeweiligen Fahrzeugeinrichtung zum Versand an die zentrale Datenverarbeitungseinrichtung zeitweise gespeicherten Fahrspurdateien, die eine vorbestimmte Datenmenge an Positionsdaten umfassen oder diese nicht überschreiten und/ oder (c) ein Speicherauslastungsgrad des Verhältnisses der Menge an in dem dezentralen Datenspeicher der jeweiligen Fahrzeugeinrichtung zum Versand an die zentrale Datenverarbeitungseinrichtung gespeicherten Positionsdaten zu einem für die Speicherung von zum Versand an die zentrale Datenverarbeitungseinrichtung vorgesehenen Positionsdaten reservierten oder zur Verfügung stehenden Speicherplatz in dem dezentralen Datenspeicher der jeweiligen Fahrzeugeinrichtung.
Prinzipiell kann die dezentrale Statusinformationen auch von einer oder mehreren dieser Größen abhängen.

Ein Beispiel für eine für die zentrale Auslastung der zentralen Datenverarbeitungseinrichtung indikative zentrale Statusinformation ist eine zentrale Statusinformation, die abhängig von der zentralen Auslastung der zentralen Datenverarbeitungseinrichtung ist.
Ein anderes Beispiel für eine für die zentrale Auslastung der zentralen Datenverarbeitungseinrichtung indikative zentrale Statusinformation ist eine zentrale Statusinformation, die einen Absolutwert oder einen Relativwert der zentralen Auslastung der zentralen Datenverarbeitungseinrichtung repräsentiert.
Die zentrale Auslastung kann absolut, beispielsweise eine Menge pro Zeiteinheit an in der zentralen Datenverarbeitungseinrichtung empfangenen oder verarbeiteten Positionsdaten, eine Menge an in der zentralen Datenverarbeitungseinrichtung zur Verarbeitung gespeicherten Positionsdaten, eine Menge an von der zentralen Datenverarbeitungseinrichtung pro Zeiteinheit an jede Fahrzeugeinrichtung zu versendenden positionsdatenspezifischen Anweisungen für die dezentralen Prozessoren der Fahrzeugeinrichtungen zum Empfang, zur Erzeugung, zur Verarbeitung und/ oder Speicherung von Positionsdaten von der zentralen Datenverarbeitungseinrichtung, oder aber eine Menge an zeitgleich zwischen der zentralen Datenverarbeitungseinrichtung und mehreren Fahrzeugeinrichtungen bestehenden Kommunikationskanälen (aktive Sessions) sein.
Die zentrale Auslastung kann relativ, beispielsweise ein Verhältnis der Menge pro Zeiteinheit an in der zentralen Datenverarbeitungseinrichtung empfangenen oder verarbeiteten Positionsdaten zu einer für den Empfang oder die Verarbeitung von Positionsdaten maximal empfangbaren oder verarbeitbaren Menge pro Zeiteinheit, ein Verhältnis der Menge an in der zentralen Datenverarbeitungseinrichtung zur Verarbeitung gespeicherten Positionsdaten zu einem für die Speicherung von zur Verarbeitung vorgesehenen Positionsdaten reservierten oder zur Verfügung stehenden Speicherplatz in der zentralen Datenverarbeitungseinrichtung oder aber ein Verhältnis an mit aktiven Sessions, das heißt zeitgleich zwischen der zentralen Datenverarbeitungseinrichtung und mehreren Fahrzeugeinrichtungen bestehenden Kommunikationskanälen, zur Gesamtanzahl der für die Kommunikation zwischen der zentralen Datenverarbeitungseinrichtung und mehreren Fahrzeugeinrichtungen zur Verfügung stehenden Kommunikationskanälen (Verhältnis von belegten Ports zur Summe aus freien und belegten Ports) sein.
Insbesondere ist die zentrale Datenverarbeitungseinrichtung ausgebildet, wenigstens eine zentrale Statusinformation zu erzeugen, die indikativ ist für eine zentrale Auslastung der zentralen Datenverarbeitungseinrichtung hinsichtlich des Empfangs, der Speicherung und/ oder der Verarbeitung von zur Erzeugung des besagten Verarbeitungsergebnisses zu verarbeitenden Positionsdaten und/ oder hinsichtlich des Versands von positionsdatenspezifischen Anweisungen für die dezentralen Prozessoren der Fahrzeugeinrichtungen zum Empfang, zur Erzeugung, zur Verarbeitung, zur Speicherung und/ oder zum Versand von Positionsdaten von der zentralen Datenverarbeitungseinrichtung an jede der Fahrzeugeinrichtungen.
Beispielsweise kann die zentrale Statusinformation abhängig sein von (i) der zentralen Kommunikationsauslastung der wenigstens einen zentralen Kommunikationseinrichtung hinsichtlich der Menge mittels der zentralen Kommunikationseinrichtung pro Zeiteinheit empfangenen oder zu empfangenden Positionsdaten, (ii) der zentralen Speicherauslastung des wenigstens einen zentralen Datenspeichers der zentralen Datenverarbeitungseinrichtung hinsichtlich der zentralen Menge an im zentralen Datenspeicher gespeicherten Positionsdaten, (iii) der zentralen Prozessorauslastung des wenigstens einen zentralen Prozessors hinsichtlich der Menge an Positionsdaten, die der zentrale Prozessor pro Zeiteinheit verarbeitet und/ oder (iv) der zentralen Versandauslastung der zentralen Datenverarbeitungseinrichtung hinsichtlich der Menge von mittels einer zentralen Kommunikationsrichtung der zentralen Datenverarbeitungseinrichtung pro Zeiteinheit an die Fahrzeugeinrichtungen zu versendenden positionsdatenspezifischen Anweisungen.
Abhängig zu sein bedeutet auch, dass die zentrale Statusinformation auch einer oder mehreren dieser Mengen und/ oder Mengen pro Zeiteinheit entsprechen kann.
Beispiele für den Inhalt einer von der zentralen Kommunikationsauslastung der wenigstens einen zentralen Kommunikationseinrichtung hinsichtlich der Menge mittels der zentralen Kommunikationseinrichtung pro Zeiteinheit empfangenen oder zu empfangenden Positionsdaten abhängigen zentralen Statusinformation oder dieser zentralen Statusinformation selbst sind (a) ein Datenstrom an Positionsdaten, der mittels der zentralen Kommunikationseinrichtung empfangen wird, (b) eine Anzahl oder ein Anteil von belegten Kanälen und/ oder aufrechterhaltenen Verbindungen der zentralen Kommunikationseinrichtung, über die die Positionsdaten empfangen werden und/ oder (c) ein Gesamtumfang an von mehreren Fahrzeugeinrichtungen mit den entsprechenden Übermittlungsanweisungen angeforderten Umfängen an zu übermittelnden Positionsdaten, deren Übermittlung noch nicht teilweise oder noch nicht vollständig erfolgt ist.

Prinzipiell kann die zentrale Statusinformationen bezüglich der zentralen Kommunikationsauslastung der zentralen Datenverarbeitungseinrichtung auch von einer oder mehreren dieser Größen abhängen.
Beispiele für den Inhalt einer von der zentralen Speicherauslastung des wenigstens einen zentralen Datenspeichers der zentralen Datenverarbeitungseinrichtung hinsichtlich der zentralen Menge an im zentralen Datenspeicher gespeicherten Positionsdaten abhängigen zentralen Statusinformation oder dieser zentralen Statusinformation selbst sind (a) eine Anzahl oder Datenmenge der Positionen von in der zentralen Datenverarbeitungseinrichtung empfangenen und zur Verarbeitung im zentralen Datenspeicher gespeicherten Positionsdaten, (b) eine Anzahl von in der zentralen Datenverarbeitungseinrichtung empfangenen und zur Verarbeitung im zentralen Datenspeicher gespeicherten Fahrspurdateien, die eine vorbestimmte Datenmenge an Positionsdaten umfassen oder diese nicht überschreiten und/ oder (c) ein Speicherauslastungsgrad des Verhältnisses der Menge an in der zentralen Datenverarbeitungseinrichtung zur Verarbeitung gespeicherten Positionsdaten zu einem für die Speicherung von zur Verarbeitung vorgesehenen Positionsdaten reservierten oder zur Verfügung stehenden Speicherplatz in dem zentralen Datenspeicher der zentralen Datenverarbeitungseinrichtung.
Prinzipiell kann die zentrale Statusinformationen bezüglich der zentralen Speicherauslastung der zentralen Datenverarbeitungseinrichtung auch von einer oder mehreren dieser Größen abhängen.
Beispiele für den Inhalt einer von der zentralen Prozessorauslastung des wenigstens einen zentralen Prozessors hinsichtlich der Menge an Positionsdaten, die der zentrale Prozessor pro Zeiteinheit verarbeitet, abhängigen zentralen Statusinformation oder dieser zentralen Statusinformation selbst sind (a) ein Datenstrom an Positionsdaten, die von dem zentralen Prozessor verarbeitet werden, (b) ein Datenstrom an besagten Verarbeitungsergebnissen, die von dem zentralen Prozessor erzeugt werden und/ oder (c) eine Anzahl an Operationen oder Instruktionen, die der zentrale Prozessor pro Zeiteinheit ausführt.
Prinzipiell kann die zentrale Statusinformationen bezüglich der zentralen Prozessorauslastung der zentralen Datenverarbeitungseinrichtung auch von einer oder mehreren dieser Größen abhängen.
Beispiele für den Inhalt einer von der zentralen Versandauslastung der zentralen Datenverarbeitungseinrichtung hinsichtlich der Menge von mittels einer zentralen Kommunikationsrichtung der zentralen Datenverarbeitungseinrichtung pro Zeiteinheit an die Fahrzeugeinrichtungen zu versendenden positionsdatenspezifischen Anweisungen abhängigen zentralen Statusinformation oder dieser zentralen Statusinformation selbst sind (a) ein Datenstrom von positionsspezifischen Anweisungen, die mittels einer zentralen Kommunikationseinrichtung der zentralen Datenverarbeitungseinrichtung an Fahrzeugeinrichtungen versendet werden, (b) eine Anzahl oder ein Anteil von belegten Kanälen und/ oder aufrechterhaltenen Verbindungen der zentralen Kommunikationseinrichtung der zentralen Datenverarbeitungseinrichtung, über die die positionsdatenspezifischen Anweisungen an Fahrzeugeinrichtungen versendet werden und/ oder (c) eine Anzahl oder ein Anteil von zum Empfang der positionsdatenspezifischen Anweisungen pro Zeiteinheit bestimmter Fahrzeugeinrichtungen, an die der Versand der zum Empfang bestimmten positionsdatenspezifischen Anweisungen noch nicht teilweise oder noch nicht vollständig erfolgt ist.
Prinzipiell kann die zentrale Statusinformationen bezüglich der zentralen Versandauslastung der zentralen Datenverarbeitungseinrichtung auch von einer oder mehreren dieser Größen abhängen.
Ganz prinzipiell kann die zentrale Statusinformation bezüglich der zentralen Auslastung der zentralen Datenverarbeitungseinrichtung auch von einer oder mehreren der bezüglich der zentralen Kommunikationsauslastung, der zentralen Speicherauslastung, der zentralen Prozessorauslastung und/oder der zentralen Versandauslastung genannten Größen abhängen.

Mit der Erfindung wird es möglich, die Übertragung von Positionsdaten einer Fahrzeugeinrichtung an die zentrale Datenverarbeitungseinrichtung dann zu untersagen oder zu beschränken, wenn die zentrale Datenverarbeitungseinrichtung insbesondere mit dem Empfang, der Speicherung und/ oder der Verarbeitung von Positionsdaten anderer Fahrzeugeinrichtungen und/oder mit dem Versand von positionsdatenspezifischen Anweisungen für die dezentralen Prozessoren der Fahrzeugeinrichtungen zu sehr ausgelastet ist.

Da auch auf Seiten der Fahrzeugeinrichtung ein Auslastungsproblem, insbesondere hinsichtlich der Speicherung der Positionsdaten für den Versand bestehen kann, darf die zentrale Datenverarbeitungseinrichtung eine mögliche Entscheidung über die Untersagung oder die Beschränkung der Übertragung von Positionsdaten nicht ohne die eine entsprechende Speicherauslastungsinformation der Fahrzeugeinrichtung treffen. Deshalb berücksichtigt die zentrale Datenverarbeitungseinrichtung erfindungsgemäß sowohl ihren eigenen, zentralen Auslastungsstatus als auch den dezentralen Auslastungsstatus der Fahrzeugeinrichtung, die ihre Positionsdaten zum Versand anbietet.
In vorteilhafter Weise kann die zentrale Datenverarbeitungseinrichtung in Abhängigkeit von der zentralen und individuellen dezentralen Auslastungssituation die Übertragung von sämtlichen Positionsdaten einer Fahrzeugeinrichtung anfordern oder die Übertragung teilweise oder vollständig ablehnen.

Fragt zum Beispiel ein Fahrzeuggerät die Bereitschaft der zentralen Datenverarbeitungseinrichtung, seine Positionsdaten zu empfangen, an mit einer dezentralen Statusinformation, die nur eine geringe Speicherauslastung des dezentralen Datenspeichers mit Positionsdaten reflektiert, so lehnt die zentrale Datenverarbeitungseinrichtung die Übertragung der Positionsdaten vollständig ab, wenn ihre zentrale Auslastung momentan eine vorgegebene Grenzauslastung übersteigt, wobei sie hingegen in einem Fall, in dem die dezentrale Statusinformation eine hohe Speicherauslastung des dezentralen Datenspeichers mit Positionsdaten reflektiert, die Übermittlung zumindest eines Teilumfangs der dezentral gespeicherten Positionsdaten anfordert, obwohl ihre zentrale Auslastung momentan die vorgegebene Grenzauslastung übersteigt. Mit anderen Worten: Auch jenseits der Grenzauslastung bleibt die zentrale Datenverarbeitungseinrichtung in gewissen Maße in der Lage, übermittlungsbedürftige Positionsdaten zu empfangen, zu speichern und zu verarbeiten.
Die Erfindung schafft damit ein hochflexibles und zuverlässiges Positionsdatenübermittlungssystem für den zentralseitigen Empfang, die zentralseitige Speicherung und die zentralseitige Verarbeitung von dezentral von einer Mehrzahl von Fahrzeugeinrichtungen gesammelten Positionsdaten.

Vorzugsweise weist die Fahrzeugeinrichtung eine Positionsbestimmungseinrichtung mit einem GNSS-Empfänger auf, der Signale von Satelliten eines GNSS (Globalen Navigationssatellitensystems, z. B. GPS, Glonass, Galileo) empfängt, aus denen die Positionsbestimmungseinrichtung eine Position des Fahrzeugs bestimmt. Die Bestimmung der Position des Fahrzeugs erfolgt vorzugsweise periodisch, beispielsweise im Sekundentakt.

Vorzugsweise ist die dezentrale Kommunikationseinrichtung ein Mobilfunk-Kommunikätionsmodul, beispielweise ein GSM-, UMTS- oder LTE-Modul, mittels dessen Daten in ein Mobilfunknetz übertragen und Daten aus einem Mobilfunknetz empfangen werden können.

Vorzugsweise ist die zentrale Kommunikationseinrichtung eine Netzwerkkarte (Netzwerkadapter, network interface card), die die Schnittstelle zwischen dem öffentlichen Telefonnetz, Mobilfunknetz und/ oder dem Internet und dem von der zentralen Datenverarbeitungseinrichtung umfassten zentralen Prozessor ist. Die Netzwerkkarte kann von einem zentralen Gateway (Content Switch) als zentrale Kommunikationseinrichtung umfasst sein, das zusätzlich eine Verteilungsfunktion zur Verteilung von verschiedenartigen Daten derselben Fahrzeugeinrichtung und/ oder zur Verteilung gleichartiger Daten verschiedener Fahrzeugeinrichtungen auf einen bestimmte von mehreren zentralen Prozessoren durchführt.
Prinzipiell kann die zentrale Kommunikationseinrichtung durch ein Modem, beispielsweise ein Festnetz-DSL-Modem, und ein Mobilfunk-GSM-Modem oder ein Mobilfunk-LTE-Modem, bereitgestellt werden. Einer oder mehreren zentralen Kommunikationseinrichtungen und einem oder mehreren Prozessoren der zentralen Datenverarbeitungseinrichtung können Load-Balancer und/ oder Router zwischengeschaltet sein, die einen Strom von eingehenden Kommunikationsdaten auf verschiedene zentrale Datenverarbeitungseinrichtungen oder verschiedene Netze, die von der zentralen Datenverarbeitungseinrichtung umfasst sein können, aufteilen oder Ströme von ausgehenden Kommunikationsdaten dieser zentralen Datenverarbeitungseinrichtungen zu einem Strom bündeln können.

Die zentrale Datenverarbeitungseinrichtung ist dabei (ebensowenig wie die Fahrzeugeinrichtung) auf eine einzige zentrale (dezentrale) Kommunikationseinrichtung beschränkt.
Beispielsweise kann der Empfang der dezentralen Statusinformationen der Fahrzeugeinrichtungen in der zentralen Datenverarbeitungseinrichtung über eine erste zentrale Kommunikationseinrichtung der zentralen Datenverarbeitungseinrichtung erfolgen und der Empfang von Positionsdaten der Fahrzeugeinrichtungen in der zentralen Datenverarbeitungseinrichtung über eine zweite zentrale Kommunikationseinrichtung der zentralen Datenverarbeitungseinrichtung erfolgen
Dazu kann beispielsweise jede Fahrzeugeinrichtung mittels ihrer dezentralen Kommunikationseinrichtung eine erste Festnetz-Telefonnummer, eine erste Mobilfunknummer oder eine erste Internet-Adresse (URL) der ersten zentralen Kommunikationseinrichtung für die Übertragung der dezentralen Statusinformation zu der zentralen Datenverarbeitungseinrichtung verwenden, und eine zweite Festnetz-Telefonnummer, eine zweite Mobilfunknummer oder eine zweite Internet-Adresse (URL) der zweiten zentralen Kommunikationseinrichtung für die Übertragung der Positionsdaten zu der zentralen Datenverarbeitungseinrichtung verwenden.

Als eine Kommunikationseinrichtung, die geeignet ist zum Versand und Empfang von Daten, wird auch eine mehrteilige Kommunikationseinrichtung angesehen, die einen ersten Kommunikationseinrichtungsteil zum Versand von Daten und einen zweiten Kommunikationseinrichtungsteil zum Empfang von Daten aufweist.

Ein Datenspeicher kann sowohl als einzelner Speicherbaustein als auch als Anordnung mehrerer Speicherbausteine realisiert sein. Je nach Vorgabe oder Bedarf kann ein Prozessor Daten in einem ersten Speicherbaustein und/ oder in einem zweiten, dritten oder vierten Speicherbaustein des Datenspeichers ablegen.

Ein Prozessor kann sowohl als eine einzelne Prozessoreinheit (z. B. CPU, Central Processing Unit) als auch als Anordnung mehrerer direkt oder indirekt über ein Netzwerk untereinander datentechnisch kommunikativ gekoppelter Prozessoreinheiten realisiert sein. Je nach Vorgabe oder Bedarf kann ein Prozessor eine Verarbeitung von Daten mittels einer ersten Prozessoreinheit und/ oder einer zweiten Prozessoreinheit durchführen.

In dem dezentralen Datenspeicher der Fahrzeugeinrichtung zum Versand an die zentrale Datenverarbeitungseinrichtung gespeicherte Positionsdaten können sowohl als Volldatensätze, die ein bestimmte Position repräsentieren, als auch als Differenzdatensätze, die einen Verschiebung (richtungsabhängigen Abstand) zu einem vorhergehenden Volldatensatz repräsentieren, vorliegen.
Sie können von einer einzigen in der Fahrzeugeinrichtung gespeicherten Positionsdatendatei,'auch Fahrspur- oder Trajektoriendatei genannt, umfasst sein, oder aber von mehreren in der Fahrzeugeinrichtung gespeicherten Positionsdatendateien umfasst sein. Das heißt: die Menge an Positionsdaten, die eine oder mehrere Trajektorien oder Fahrspuren repräsentieren, kann von einer einzigen Fahrspurdatei umfasst sein oder auf mehrere Fahrspurdateien aufgeteilt sein, die eine vorbestimmte Datenmenge an Positionsdaten umfassen oder diese nicht überschreiten.

Die zentrale Datenverarbeitungseinrichtung ist insbesondere dadurch gekennzeichnet, dass sie abseits derjenigen Fahrzeuge angeordnet ist, die jeweils eine Fahrzeugeinrichtung mitführen. Insbesondere wird die zentrale Datenverarbeitungseinrichtung von keinem Fahrzeug mitgeführt, das jeweils eine Fahrzeugeinrichtung mitführt. Insbesondere ist jede Fahrzeugeinrichtung in jeweils einem Fahrzeug angeordnet, beispielsweise indem sie fest oder lösbar in einen Schacht im Fahrzeug eingesetzt ist, an dem Armaturenbrett (dash-board), der Frontscheibe oder am Kabinendach innerhalb der Fahrerkabine oder - insbesondere bei Personenkraftwagen - innerhalb des Fahrzeuginnenraumes befestigt ist.

Der spezifizierte Umfang an zu übermittelnden Positionsdaten kann Null sein (in diesem Fall werden keine Positionsdaten der in der Fahrzeugeinrichtung zum Versand an die zentrale Datenverarbeitungseinrichtung gespeicherten Positionsdaten von der Fahrzeugeinrichtung an die zentrale Datenverarbeitungseinrichtung übermittelt), sie kann einen Teilumfang bilden (in diesem Fall wird eine entsprechende Teilmenge der Menge an in der Fahrzeugeinrichtung zum Versand an die zentrale Datenverarbeitungseinrichtung gespeicherten Positionsdaten von der Fahrzeugeinrichtung an die zentrale Datenverarbeitungseinrichtung übermittelt) oder sie kann einen Vollumfang bilden, bei dem die gesamte Menge an in der Fahrzeugeinrichtung zum Versand an die zentrale Datenverarbeitungseinrichtung gespeicherten Positionsdaten von der Fahrzeugeinrichtung an die zentrale Datenverarbeitungseinrichtung übermittelt wird. Dabei ist unter der gesamten Menge an in der Fahrzeugeinrichtung zum Versand an die zentrale Datenverarbeitungseinrichtung gespeicherten Positionsdaten diejenige Menge an in der Fahrzeugeinrichtung gespeicherten Positionsdaten zu verstehen, die tatsächlich gemäß der positionsdatenspezifischen Anweisungen versandt werden sollen. Lauten die positionsdatenspezifischen Anweisungen beispielsweise, Positionsdaten in Fahrspurdateien in Form einer Trajektorie von mehreren Positionen zu speichern und nur vollständige Fahrspurdateien, das heißt Fahrspurdateien mit einer bestimmten Menge an Positionsdaten oder einer bestimmten Menge an Positionen, an die zentrale Datenverarbeitungseinrichtung zu versenden, so erstreckt sich die gesamte Menge von zum Versand an die zentrale Datenverarbeitungseinrichtung gespeicherten Positionsdaten nur auf solche Positionsdaten, die von vollständigen, zum Versand bereiten, Fahrspurdateien umfasst sind, und nicht auf Positionsdaten der einen oder mehreren Fahrspurdateien, die noch mit Positionsdaten angefüllt werden müssen, damit sie vollständig werden.
Insbesondere können während der Übertragung der vollständigen Fahrspurdateien Positionsdaten in wenigstens eine unvollständige Fahrspurdatei geschrieben werden, die nicht zum Umfang an zu übermittelnden Positionsdaten zählt.

Eine Übertragung eines Teilumfangs der Menge von Positionsdaten kann dementsprechend bedeuten, dass von einer einzigen Fahrspurdatei nur einige und nicht alle, Positionsdaten an die zentrale Datenverarbeitungseinrichtung übermittelt werden, oder dass von mehreren Fahrspurdateien nur einige und nicht alle Fahrspurdateien an die zentrale Datenverarbeitungseinrichtung übermittelt werden.
Insbesondere erfolgt die Übermittlung von Positionsdaten nach dem Prinzip "first-in, first-out", das heißt die zuerst gespeicherten (ältesten) Positionsdaten werden zuerst übertragen, bevor die später gespeicherten (jüngeren) Positionsdaten übertragen werden.

Zur zumindest zeitweisen Speicherung von Positionsdaten der mehreren zeitlich aufeinanderfolgend bestimmten Positionen weist die Fahrzeugeinrichtung vorzugsweise wenigstens einen dezentralen Datenspeicher auf. Vorzugsweise werden Positionsdaten, die von der Fahrzeugeinrichtung an zentrale Datenverarbeitungseinrichtung gesendet wurden, gelöscht, beispielsweise nachdem die Fahrzeugeinrichtung von der zentralen Datenverarbeitungseinrichtung ein Signal über den erfolgreichen Empfang aller Positionsdaten erhalten hat. Damit steht anschließend im dezentralen Datenspeicher wieder mehr Speicherplatz zur Neuaufnahme von weiteren Positionsdaten zur Verfügung.
Generell ist der Speicherplatz im dezentralen Datenspeicher zur Aufnahme von Positionsdaten durch die Speicherkapazität des Datenspeichers begrenzt. Es kann zusätzlich der Speicherplatz im Datenspeicher zur Aufnahme von Positionsdaten dadurch begrenzt sein, dass nur ein Teil der Speicherkapazität des dezentralen Datenspeichers für die Speicherung der Positionsdaten reserviert wird.
Ist der zur Speicherung von zur Übertragung an die zentrale Verfügung vorgesehenen Positionsdaten stehende Speicherplatz erschöpft, so kann die Fahrzeugeinrichtung eine entsprechenden Signalisierung durchführen, die für Mautpflichtigen bedeutet, dass er ein anderes Verfahren zur Erhebung von Maut anwenden muss, als jenes welches durch die Positionsdatenaufzeichnung der Fahrzeugeinrichtung unterstützt wird - beispielsweise das sogenannte manuelle Verfahren, in dem er seine mautpflichtige Route im Voraus benennt und bezahlt.

Der jeweilige dezentrale Prozessor einer jeden Fahrzeugeinrichtung ist vorzugsweise ausgebildet, die dezentrale Kommunikationseinrichtung der Fahrzeugeinrichtung anzuweisen, Positionsdaten an die zentrale Datenverarbeitungseinrichtung zu senden.
Besonders bevorzugt ist der jeweilige dezentrale Prozessor der Fahrzeugeinrichtung ausgebildet, der dezentralen Kommunikationseinrichtung Positionsdaten in dem Umfang bereitzustellen, der seitens der zentralen Datenverarbeitungseinrichtung in der Übermittlungsanweisung spezifiziert wurde.

Das Positionsdatenübermittlungssystem kann dadurch gekennzeichnet sein, dass jede Fahrzeugeinrichtung ausgebildet ist, die dezentrale Statusinformation ohne Positionsdaten der Menge an zur Versendung an die zentrale Datenverarbeitungseinrichtung in der jeweiligen Fahrzeugeinrichtung gespeicherte Positionsdaten an die zentrale Datenverarbeitungseinrichtung zu versenden.
Damit kann sowohl der Umfang der die Statusinformation enthaltenden Statusnachricht, die von jeder Fahrzeugeinrichtung an die zentrale Datenverarbeitungseinrichtung versendet wird, als auch der Verarbeitungsaufwand, der zentralseitig von der zentralen Datenverarbeitungseinrichtung an der Statusnachricht geleistet werden muss, gering gehalten werden. Dies spart sowohl dezentralseitig als auch zentralseitig Prozessorkapazität und damit Zeit, die stattdessen für die zentralseitige Verarbeitung von Statusnachrichten anderer Fahrzeugeinrichtungen und die Positionsdaten im Allgemeinen zur Verfügung steht.
Alternativ dazu kann das Positionsdatenübermittlungssystem dadurch gekennzeichnet sein, dass jede Fahrzeugeinrichtung ausgebildet ist, die dezentrale Statusinformation zusammen mit Positionsdaten wenigstens einer ausgewählten Position der Menge an zur Versendung an die zentrale Datenverarbeitungseinrichtung in der jeweiligen Fahrzeugeinrichtung gespeicherten Positionsdaten an die zentrale Datenverarbeitungseinrichtung zu versenden, und die zentrale Datenverarbeitungseinrichtung ausgebildet ist, den Umfang an von der Fahrzeugeinrichtung zu übermittelnden Positionsdaten zusätzlich anhand von der wenigstens einen von der Fahrzeugeinrichtung übermittelten ausgewählten Position zu bestimmen.
Eine solche Ausführungsform hat den Vorteil, dass der zentralen Datenverarbeitungseinrichtung ein weiteres Kriterium zur Verfügung steht, anhand dessen sie die Positionsdatenübermittlung der betreffenden Fahrzeugeinrichtung vorrangig oder nachrangig einordnen kann. Liegt beispielsweise die ausgewählte Position innerhalb eines grenznahen Gebietes, über das ein Fahrzeug ein Mautgebiet über dessen Grenze hinaus verlässt, so kann die zentrale Datenverarbeitungseinrichtung die Fahrzeugeinrichtung anweisen, den vollen Umfang ihrer Positionsdaten an die zentrale Datenverarbeitungseinrichtung zu übermitteln, bevor das Fahrzeug das Mautgebiet beispielsweise in das Ausland verlässt, in dem das Fahrzeug durch staatliche Stellen des Mautgebietes nicht mehr verfolgt werden kann.
Liegt die ausgewählte Position nicht in einem grenznahen Gebiet, aber innerhalb des Mautgebietes, so kann die zentrale Datenverarbeitungseinrichtung mangels Relevanz die Anweisung an die Fahrzeugeinrichtung erteilen, keine Positionsdaten an die zentrale Datenverarbeitungseinrichtung zu senden.

Vorzugsweise ist die zentrale Datenverarbeitungseinrichtung ausgebildet, den Umfang an von der jeweiligen Fahrzeugeinrichtung an die zentrale Datenverarbeitungseinrichtung zu übermittelnden Positionsdaten umso größer zu bestimmen, je kleiner die zentrale Auslastung der zentralen Datenverarbeitungseinrichtung hinsichtlich des Empfangs, der Speicherung und/ oder der Verarbeitung der Positionsdaten und/ oder je größer die dezentrale Speicherauslastung des jeweiligen dezentralen Datenspeichers hinsichtlich der Speicherung von zum Versand an die zentrale Datenverarbeitungseinrichtung vorgesehenen gespeicherten Positionsdaten ist.
Damit kann den Auslastungsgegebenheiten der jeweiligen Fahrzeugeinrichtung und der zentralen Datenverarbeitungseinrichtung in adäquater Weise Rechnung getragen werden: Je größer die Höhe der dezentralen Speicherauslastung der jeweiligen Fahrzeugeinrichtung ist, desto mehr Positionsdaten werden zur Übermittlung angefordert; je größer die Höhe der zentralen Auslastung ist, desto weniger Positionsdaten werden angefordert.

Ausführungsformen des erfindungsgemäßen Positionsübermittlungssystems sind dadurch gekennzeichnet, dass die zentrale Datenverarbeitungseinrichtung ausgebildet ist, den Umfang zu Null zu bestimmen, wenn die zentrale Auslastung der zentralen Datenverarbeitungseinrichtung , für die die zentrale Statusinformation abhängig indikativ ist, eine vorbestimmte zentrale Grenzauslastung überschreitet und/ oder die dezentrale Speicherauslastung des jeweiligen dezentralen Datenspeichers, für die die dezentrale Statusinformation indikativ ist, eine vorbestimmte dezentrale Speichergrenzauslastung nicht überschreitet.
Beispielsweise kann die vorbestimmte zentrale Grenzauslastung bedeuten, dass 50 % der zur Verfügung stehenden Kommunikationskanäle oder 50% einer Kommunikationskanalkapazität ausgeschöpft sind, 50 % des für Positionsdaten zur Verfügung stehenden Speicherplatzes belegt sind und/ oder 50 % der für die Verarbeitung von Positionsdaten pro Zeiteinheit ausführbaren Operationen oder Instruktionen ausgeführt werden. Dabei kann die Statusinformation als Flag den Wert 1 annehmen, der eine Ausschöpfung der zentralen Kommunikations-, Speicher- und/ oder Prozessorkapazität repräsentiert. Je nach Definition kann die Statusinformation als Flag auch den Wert 0 annehmen, um eine Ausschöpfung der zentralen Kommunikations-, Speicher- und/ oder Prozessorkapazität anzuzeigen.
Insbesondere ist in dem Fall, in dem die zentrale Datenverarbeitungseinrichtung ausgebildet ist, den Umfang zu Null zu bestimmen, eine jede Fahrzeugeinrichtung, die eine Übermittlungsanweisung empfangen hat, keine Positionsdaten zu übermitteln, ausgebildet, zu wenigstens einem weiteren definierten Anlass wenigstens eine weitere für die dezentrale Speicherauslastung ihres jeweiligen dezentralen Datenspeichers indikative dezentrale Statusinformation mittels der dezentralen Kommunikationseinrichtung an die zentrale Datenverarbeitungseinrichtung zu versenden, und die zentrale Datenverarbeitungseinrichtung ausgebildet, die weitere dezentrale Statusinformation von der jeweiligen Fahrzeugeinrichtung zu empfangen, wenigstens eine für die zentrale Auslastung der zentralen Datenverarbeitungseinrichtung indikative weitere zentrale Statusinformation zu erzeugen, anhand der von einer jeweiligen Fahrzeugeinrichtung empfangenen weiteren dezentralen Statusinformation und der erzeugten zentralen Statusinformation einen von Null verschiedenen Umfang an von der jeweiligen Fahrzeugeinrichtung an die zentrale Datenverarbeitungseinrichtung zu übermittelnden Positionsdaten zu bestimmen, wenn die zentrale Auslastung der zentralen Datenverarbeitungseinrichtung, für'die die weitere zentrale Statusinformation indikativ ist, eine vorbestimmte zentrale Grenzauslastung nicht überschreitet und/ oder die dezentrale Speicherauslastung des jeweiligen dezentralen Datenspeichers, für die die weitere dezentrale Statusinformation indikativ ist, eine vorbestimmte dezentrale Speichergrenzauslastung überschreitet, und eine Übermittlungsanweisung mit dem von Null verschiedenen bestimmten Umfang an die jeweilige Fahrzeugeinrichtung zu versenden, von der sie die dezentrale Statusinformation empfangen hat, und schließlich die jeweilige Fahrzeugeinrichtung ausgebildet, die Übermittlungsanweisung von der zentralen Datenverarbeitungseinrichtung mittels der dezentralen Kommunikationseinrichtung zu empfangen und von der dezentralen Menge an in ihrem jeweiligen dezentralen Datenspeicher zum Versand an die zentrale Datenverarbeitungseinrichtung gespeicherten Positionsdaten den in der empfangenen Übermittlungsanweisung spezifizierten von Null verschiedenen Umfang mittels der dezentralen Kommunikationseinrichtung an die zentrale Datenverarbeitungseinrichtung zu versenden.

Damit wird ein Positionsdatenübermittlungssystem bereitgestellt, das eine Mehrzahl von jeweils von einem Fahrzeug mitgeführten Fahrzeugeinrichtungen, die jeweils wenigstens einen dezentralen Prozessor zum Verarbeiten von Daten, wenigstens einen dezentralen Datenspeicher zum zumindest zeitweisen Speichern von Daten und wenigstens eine dezentrale Kommunikationseinrichtung zum dezentralseitigen Versand und Empfang von Daten aufweisen, und wenigstens eine zentrale Datenverarbeitungseinrichtung mit wenigstens einem zentralen Prozessor zum Verarbeiten von Daten, wenigstens einem zentralen Datenspeicher zum zumindest zeitweisen Speichern von Daten und wenigstens einer zentralen Kommunikationseinrichtung zum zentralseitigen Empfang und Versand von Daten umfasst, wobei jede Fahrzeugeinrichtung ausgebildet ist, (a) Positionsdaten von mehreren zeitlich aufeinanderfolgend bestimmten Positionen ihres jeweiligen Fahrzeugs mittels des dezentralen Prozessors aufgrund von in der Fahrzeugeinrichtung gespeicherten positionsdatenspezifischen Anweisungen zu empfangen, zu erzeugen und/ oder zu verarbeiten und zumindest zeitweise in dem dezentralen Datenspeicher zu speichern, und (b) in dem dezentralen Datenspeicher zumindest zeitweise gespeicherte Positionsdaten mittels der dezentralen Kommunikationseinrichtung an die zentrale Datenverarbeitungseinrichtung zu versenden, und die zentrale Datenverarbeitungseinrichtung ausgebildet ist, (c) jeweils von einer Fahrzeugeinrichtung versendete Positionsdaten zentralseitig mittels der zentralen Kommunikationseinrichtung zu empfangen und zumindest bis zu einer Verarbeitung durch den zentralen Prozessor im zentralen Datenspeicher zu speichern, (d) die empfangenen Positionsdaten mittels des zentralen Prozessors zu verarbeiten und wenigstens ein aus der Verarbeitung der empfangenen Positionsdaten resultierendes Verarbeitungsergebnis zu erzeugen, wobei das Positionsdatenübermittlungssystem dadurch gekennzeichnet ist, dass jede Fahrzeugeinrichtung ausgebildet ist, (e) zu wenigstens einem ersten definierten Anlass wenigstens eine für eine dezentrale Speicherauslastung ihres jeweiligen dezentralen Datenspeichers indikative erste dezentrale Statusinformation mittels der dezentralen Kommunikationseinrichtung an die zentrale Datenverarbeitungseinrichtung zu versenden, die zentrale Datenverarbeitungseinrichtung ausgebildet ist, (f) die erste dezentrale Statusinformation von der jeweiligen Fahrzeugeinrichtung zu empfangen, (g) wenigstens eine für eine zentrale Auslastung der zentralen Datenverarbeitungseinrichtung indikative erste zentrale Statusinformation zu erzeugen, (h) anhand der von einer jeweiligen Fahrzeugeinrichtung empfangenen ersten dezentralen Statusinformation und der erzeugten ersten zentralen Statusinformation einen Umfang an von der jeweiligen Fahrzeugeinrichtung an die zentrale Datenverarbeitungseinrichtung zu übermittelnden Positionsdaten zu Null zu bestimmen, wenn die zentrale Auslastung der zentralen Datenverarbeitungseinrichtung, für die die erste zentrale Statusinformation indikativ ist, eine vorbestimmte zentrale Grenzauslastung überschreitet und/ oder die dezentrale Speicherauslastung des jeweiligen dezentralen Datenspeichers, von der die dezentrale Statusinformation abhängig ist, eine vorbestimmte dezentrale Speichergrenzauslastung nicht überschreitet und (i) eine erste Übermittlungsanweisung an die jeweilige Fahrzeugeinrichtung, von der sie die erste dezentrale Statusinformation empfangen hat, mit der Anweisung zu versenden, keine Positionsdaten an die zentrale Datenverarbeitungseinrichtung zu übermitteln, und weiterhin jede Fahrzeugeinrichtung, die eine erste Übermittlungsanweisung zur Übermittlung keiner Positionsdaten empfangen hat, ausgebildet ist, (j) zu wenigstens einem zweiten definierten Anlass, dessen Auftreten dem Auftreten des ersten definierten Anlasses zeitlich nachgeordnet ist, wenigstens eine für eine dezentrale Speicherauslastung ihres jeweiligen dezentralen Datenspeichers indikative zweite dezentrale Statusinformation mittels der dezentralen Kommunikationseinrichtung an die zentrale Datenverarbeitungseinrichtung zu versenden, die zentrale Datenverarbeitungseinrichtung ausgebildet ist, (k) die zweite dezentrale Statusinformation von der jeweiligen Fahrzeugeinrichtung zu empfangen, (I) wenigstens eine für eine zentrale Auslastung der zentralen Datenverarbeitungseinrichtung indikative zweite zentrale Statusinformation zu erzeugen, (m) anhand der von der jeweiligen Fahrzeugeinrichtung empfangenen zweiten dezentralen Statusinformation und der erzeugten zweiten zentralen Statusinformation einen von Null verschiedenen Umfang an von der jeweiligen Fahrzeugeinrichtung an die zentrale Datenverarbeitungseinrichtung zu übermittelnden Positionsdaten zu bestimmen, wenn die zentrale Auslastung der zentralen Datenverarbeitungseinrichtung, für die die zweite zentrale Statusinformation indikativ ist, eine vorbestimmte zentrale Grenzauslastung nicht überschreitet und/ oder die dezentrale Speicherauslastung des jeweiligen dezentralen Datenspeichers, für die die zweite dezentrale Statusinformation indikativ ist, eine vorbestimmte dezentrale Speichergrenzauslastung überschreitet, und (n) eine zweite Übermittlungsanweisung mit dem von Null verschiedenen bestimmten Umfang an die jeweilige Fahrzeugeinrichtung zu versenden, von der sie die zweite dezentrale Statusinformation empfangen hat, und schließlich jede Fahrzeugeinrichtung, die die zweite Statusinformation gesendet hat, ausgebildet ist, (o) die zweite Übermittlungsanweisung von der zentralen Datenverarbeitungseinrichtung mittels der dezentralen Kommunikationseinrichtung zu empfangen und (p) von der dezentralen Menge an in ihrem jeweiligen dezentralen Datenspeicher zum Versand an die zentrale Datenverarbeitungseinrichtung gespeicherten Positionsdaten den in der empfangenen Übermittlungsanweisung spezifizierten von Null verschiedenen Umfang mittels der dezentralen Kommunikationseinrichtung an die zentrale Datenverarbeitungseinrichtung zu versenden.

Insbesondere ist die zweite dezentrale Statusinformation für eine dezentrale Speicherauslastung des dezentralen Datenspeichers der jeweiligen Fahrzeugeinrichtung zu einem Zeitpunkt indikativ, der dem Zeitpunkt des Versands der ersten dezentralen Statusinformation dieser Fahrzeugeinrichtung an die zentrale Datenverarbeitungseinrichtung zeitlich nachgeordnet ist. Insbesondere ist die zweite dezentrale Statusinformation für eine zweite dezentrale Speicherauslastung des dezentralen Datenspeichers der jeweiligen Fahrzeugeinrichtung indikativ, während die erste dezentrale Statusinformation für eine erste dezentrale Speicherauslastung des dezentralen Datenspeichers der jeweiligen Fahrzeugeinrichtung indikativ ist, die der zweiten dezentralen Speicherauslastung zeitlich vorangeht.
Insbesondere ist die zweite zentrale Statusinformation für eine zentrale Auslastung der zentralen Datenverarbeitungseinrichtung zu einem Zeitpunkt indikativ, der dem Zeitpunkt der Erzeugung der ersten zentralen Statusinformation der zentralen Datenverarbeitungseinrichtung zeitlich nachgeordnet ist. Insbesondere ist die zweite zentrale Statusinformation für eine zweite zentrale Auslastung der zentralen Datenverarbeitungseinrichtung indikativ, während die erste zentrale Statusinformation für eine erste zentrale Auslastung der zentralen Datenverarbeitungseinrichtung indikativ ist, die der zweiten zentralen Auslastung zeitlich vorangeht.

Ausführungsformen des erfindungsgemäßen Positionsübermittlungssystems sind dadurch gekennzeichnet, dass die zentrale Datenverarbeitungseinrichtung ausgebildet ist, den Umfang zur gesamten Menge der in der Fahrzeugeinrichtung zur Versendung an die zentrale Datenverarbeitungseinrichtung gespeicherten Positionsdaten zu bestimmen, wenn die zentrale Auslastung der zentralen Datenverarbeitungseinrichtung, von der die zentrale Statusinformation abhängig ist, eine vorbestimmte zentrale Grenzauslastung nicht überschreitet und/ oder die dezentrale Speicherauslastung des jeweiligen dezentralen Datenspeichers, von der die dezentrale Statusinformation abhängig ist, eine vorbestimmte dezentrale Speichergrenzauslastung überschreitet.

Beispiele für einen definierten Anlass für den Versand der dezentralen Statusinformation sind (i) das Überschreiten einer vorbestimmten Höchstzahl an wiederholten Versuchen der jeweiligen Fahreinrichtung nach Ablauf einer vorbestimmten Zeitdauer seit einem vorhergehenden erfolglosen Versuch der jeweiligen Fahrzeugeinrichtung ist, von der zentralen Datenverarbeitungseinrichtung eine Übermittlungsanweisung zur Übermittlung eines von Null verschiedenen Umfangs der dezentralen Menge an in der jeweiligen Fahrzeugeinrichtung zur Versendung an die zentrale Datenverarbeitungseinrichtung gespeicherten Positionsdaten an die zentralen Datenverarbeitungseinrichtung zu erhalten, (ii) eine von der jeweiligen Fahrzeugeinrichtung detektierte Störung der jeweiligen Fahrzeugeinrichtung oder des Empfangs von zur Positionsbestimmung dienlichen Signalen, (iii) das Befahren eines vorbestimmten Gebietes, wobei das Befahren eines vorbestimmten Gebietes von der jeweiligen Fahrzeugeinrichtung durch Vergleich von Positionsdaten einer oder mehrerer bestimmter Positionen des Fahrzeugs mit in der jeweiligen Fahrzeugeinrichtung gespeicherten geographischen Daten, die maßgeblich sind für das Erkennen des Befahrens des vorbestimmten Gebiet es, festgestellt wird, (iv) das Vorliegen einer vorgegebenen Anzahl von in dem dezentralen Datenspeicher gespeicherten Fahrspurdateien, die jeweils zur Übertragung an die zentrale Datenverarbeitungseinrichtung vorgesehene Positionsdaten umfassen, (v) das Überschreiten eines vorbestimmten Speicherauslastungshöchstgrades eines Speicherauslastungsgrades, der dem Verhältnis der Menge an in der jeweiligen Fahrzeugeinrichtung zum Versand an die zentrale Datenverarbeitungseinrichtung gespeicherten Positionsdaten zu einem für die Speicherung von zum Versand an die zentrale Datenverarbeitungseinrichtung vorgesehenen Positionsdaten reservierten oder zur Verfügung stehenden Speicherplatz in der Fahrzeugeinrichtung entspricht, (vi) der Empfang einer vorbestimmten Nachricht in der jeweiligen Fahrzeugeinrichtung (beispielsweise der Empfang einer von der zentralen Datenverarbeitungseinrichtung über das Mobilfunknetz an die Fahrzeugeinrichtung versendete Nachricht oder der Empfang eines Signals von einer straßenseitigen DSRC-Kommunikationsvorrichtung über eine fahrzeugseitige DSRC-Kommunikationseinrichtung der Fahrzeugeinrichtung), (vii) das Einschalten oder die Inbetriebsetzung der jeweiligen Fahrzeugeinrichtung (viii) das Wiedereinschaltung oder die Wiederinbetriebsetzung der jeweiligen Fahrzeugeinrichtung nach Ablauf einer vorbestimmten Zeitdauer seit dem letzten Ausschalten oder der letzten Außerbetriebsetzung der jeweiligen Fahrzeugeinrichtung oder der Ablauf einer vorbestimmten Zeitdauer seit dem letzten Wiedereinschalten oder der letzten Wiederinbetriebsetzung, (ix) das Überschreiten einer vorbestimmten Geschwindigkeit oder das Zurücklegen einer vorbestimmten Strecke, nachdem die vorbestimmte Geschwindigkeit innerhalb einer vorbestimmten Zeitdauer nicht überschritten wurde oder die vorbestimmte Strecke innerhalb vorbestimmten Zeitdauer nicht zurückgelegt wurde, und (x) das Einleiten eines Ausschaltvorgangs zur Außerbetriebsetzung der Fahrzeugeinrichtung.
Jeder dieser Anlässe kann jeweils bereits für sich allein genommen oder erst in einer prinzipiell beliebigen Kombination mit einem oder mehreren weiteren dieser Anlässe, d. h. das akkumulierte Auftreten mehrerer Anlässe, die für sich allein (noch) keinen Versand der dezentralen Statusinformation bedingen, Auslöser für den Versand der dezentralen Statusinformation sein.

Ausführungsformen des erfindungsgemäßen Positionsdatenübermittlungssystems sehen vor, dass jede Fahrzeugeinrichtung ausgebildet ist, zu dem definierten Anlass zusätzlich zu der dezentralen Statusinformation eine dezentrale Anlassinformation über den Anlass für den Versand der dezentralen Statusinformation mittels der dezentralen Kommunikationseinrichtung an die zentrale Datenverarbeitungseinrichtung zu versenden, und die zentrale Datenverarbeitungseinrichtung ausgebildet ist, zusätzlich anhand der von der jeweiligen Fahrzeugeinrichtung empfangenen dezentralen Anlassinformation den Umfang an von der Fahrzeugeinrichtung zu übermittelnden Positionsdaten zu bestimmen.
Damit wird ein zusätzlicher Freiheitsgrad für die zentrale Datenverarbeitungseinrichtung hinsichtlich der Bestimmung des Umfangs an von der Fahrzeugeinrichtung zu übermittelnden Positionsdaten geschaffen, was insbesondere die Flexibilität der zentralen Datenverarbeitung in der Frage der Ausschöpfung von Restkapazitäten bis zur vollen zentralen Auslastung oder einer spezifizierten zentralen Grenzauslastung angeht. So kann die zentrale Datenverarbeitung abhängig von dem jeweiligen Übermittlungsanlass entscheiden, ob sie trotz der einer dezentralen Statusinformation, die die Überschreitung einer vorbestimmten dezentralen Speichergrenzauslastung repräsentiert, eine Anforderung von zumindest einer Teilmenge der dezentral gespeicherten Positionsdatenmenge unterlässt oder nicht. Ebenso kann die die zentrale Datenverarbeitung abhängig von dem jeweiligen Übermittlungsanlass entscheiden, ob sie trotz der einer dezentralen Statusinformation, die keine Überschreitung einer vorbestimmten dezentralen Speichergrenzauslastung repräsentiert, eine Anforderung von zumindest einer Teilmenge der dezentral gespeicherten Positionsdatenmenge durchführt oder nicht. Diese Maßnahme erhöht folglich die Zuverlässigkeit der zentralen Positionsdatenverarbeitung.

Ausführungsformen des erfindungsgemäßen Positionsdatenübermittlungssystems sehen vor, dass jede Fahrzeugeinrichtung ausgebildet ist, zu dem definierten Anlass zusätzlich zu der dezentralen Statusinformation eine Fahrzeugeinrichtungsinformation, die indikativ für einen für die Speicherung von zum Versand an die zentrale Datenverarbeitungseinrichtung vorgesehenen Positionsdaten reservierten oder zur Verfügung stehenden Speicherplatz in dem dezentralen Datenspeicher der jeweiligen Fahrzeugeinrichtung ist, mittels der dezentralen Kommunikationseinrichtung an die zentrale Datenverarbeitungseinrichtung zu versenden, und die zentrale Datenverarbeitungseinrichtung ausgebildet ist, zusätzlich anhand der von der jeweiligen Fahrzeugeinrichtung empfangenen Fahrzeugeinrichtungsinformation den Umfang an von der Fahrzeugeinrichtung zu übermittelnden Positionsdaten zu bestimmen.
Auch mit dieser Maßnahme wird ein zusätzlicher Freiheitsgrad für die zentrale Datenverarbeitungseinrichtung hinsichtlich der Bestimmung des Umfangs an von der Fahrzeugeinrichtung zu übermittelnden Positionsdaten geschaffen, was insbesondere die Flexibilität der zentralen Datenverarbeitung in der Frage der Ausschöpfung von Restkapazitäten bis zur vollen zentralen Auslastung oder einer spezifizierten zentralen Grenzauslastung angeht. So kann die zentrale Datenverarbeitungseinrichtung anhand der Fahrzeugeinrichtungsinformation entscheiden, ob die individuell in einer Fahrzeugeinrichtung gespeicherte Positionsdatenmenge für die jeweilige Fahrzeugeinrichtung eine kritische Auslastung der individuellen Speicherkapazität bedeutet oder nicht. Denn es können in der Flotte von Fahrzeugeinrichtungen Fahrzeugeinrichtungen verschiedener technischer Generation enthalten sein, die unterschiedliche Speicherkapazitäten zur Speicherung von Positionsdaten aufweisen.
Damit kann die zentrale Datenverarbeitung bei ansonsten gleicher Größe von zur Übertragung an die zentrale Datenverarbeitungseinrichtung vorrätigen Positionsdatenmengen von jenen Fahrzeugeinrichtungen einen höheren Umfang von Positionsdaten anfordern, deren Speicher kleiner ist als der anderer Fahrzeugeinrichtungen, von denen die zentrale Datenverarbeitungseinrichtung einen niedrigen Umfang von Positionsdaten anfordern würde.
Auch diese Maßnahme erhöht folglich die Zuverlässigkeit der zentralen Positionsdatenverarbeitung.

Insbesondere in den Fällen jeder der beiden vorhergehenden Ausführungsformen - aber auch ganz allgemein - kann das Positionsdatenübermittlungssystem in der Weise weitergebildet sein, dass die zentrale Datenverarbeitungseinrichtung ausgebildet ist, den Umfang zu Null zu bestimmen, wenn nicht ein die Bestimmung eines von Null verschiedenen Umfangs bedingendes Aufstockungskriterium erfüllt ist, welches auf das Eintreffen wenigstens einer vorbestimmten dezentralen Anlassinformation und/ oder wenigstens einer vorbestimmten Fahrzeugeinrichtungsinformation, die indikativ für einen für die Speicherung von zum Versand an die zentrale Datenverarbeitungseinrichtung vorgesehenen Positionsdaten reservierten oder zur Verfügung stehenden Speicherplatz in dem dezentralen Datenspeicher der jeweiligen Fahrzeugeinrichtung ist, lautet.

Alternativ oder optional dazu kann in den Fällen jeder der beiden vorhergehenden Ausführungsformen das Positionsdatenübermittlungssystem in der Weise weitergebildet sein, dass die zentrale Datenverarbeitungseinrichtung ausgebildet ist, den Umfang zur gesamten Menge der in der Fahrzeugeinrichtung zur Versendung an die zentrale Datenverarbeitungseinrichtung gespeicherten Positionsdaten zu bestimmen, wenn nicht ein die Bestimmung eines von der gesamten Menge verschiedenen Umfangs bedingendes Abschlagskriterium erfüllt ist, welches auf das ausbleibende Eintreffen wenigstens einer vorbestimmten dezentralen Anlassinformation und/ oder wenigstens einer vorbestimmten Fahrzeugeinrichtungsinformation, die indikativ für einen für die Speicherung von zum Versand an die zentrale Datenverarbeitungseinrichtung vorgesehenen Positionsdaten reservierten oder zur Verfügung stehenden Speicherplatz in dem dezentralen Datenspeicher der jeweiligen Fahrzeugeinrichtung ist, lautet.

Beide Weiterbildungen reflektieren das flexible Eingehen der zentralen Datenverarbeitungseinrichtung auf Ausnahmesituationen, die entweder eine Positionsdatenübertragung trotz hoher zentraler Auslastung (die beispielsweise gemäß der weiter oben genannten Bedingungen die Bestimmung des Umfangs zu Null zur Folge gehabt hätte) oder einen reduzierten Umfang an zu übertragenden Positionsdaten trotz geringer zentraler Auslastung (die beispielsweise gemäß der weiter oben genannten Bedingungen die Bestimmung des Umfangs zur gesamten Menge an dezentral gespeicherten Positionsdaten zur Folge gehabt hätte) rechtfertigen.
Damit kann insbesondere im Falle einer zentralen Auslastung im Grenzbereich einer vorbestimmten zentralen Grenzauslastung die Verarbeitung von Positionsdaten von denjenigen Fahrzeugeinrichtungen gesichert werden, deren Ausnahmebedingungen dies erfordern.

Vorzugsweise ist das erfindungsgemäße Positionsdatenübermittlungssystem von einem Mautsystem umfasst, in dem jede Fahrzeugeinrichtung und/ oder die zentrale Datenverarbeitungseinrichtung ausgebildet sind, durch eine einen Vergleich mit für die Erkennung der Befahrung eines mautpflichtigen Streckenabschnitts maßgeblichen geographischen Daten umfassende Verarbeitung der Positionsdaten einer oder mehrerer bestimmter Positionen des Fahrzeugs wenigstens ein Verarbeitungsergebnis zu erzeugen, welches die Kennung eines befahrenen mautpflichtigen Streckenabschnitts und/ oder eine Mautgebühr für das Befahren eines mautpflichtigen Streckenabschnitts oder mehrerer mautpflichtiger Streckenabschnitte beinhaltet.

Insbesondere ist das erfindungsgemäße Positionsdatenübermittlungssystem von einem Mautsystem umfasst, in dem die zentrale Datenverarbeitungseinrichtung ausgebildet ist, als Verarbeitungsergebnis die Kennung eines befahrenen mautpflichtigen Streckenabschnitts oder mehrerer mautpflichtiger Streckenabschnitte und/oder eine Mautgebühr für das Befahren eines mautpflichtigen Streckenabschnitts oder mehrerer mautpflichtiger Streckenabschnitte durch eine einen Vergleich mit für die Erkennung der Befahrung eines mautpflichtigen Streckenabschnitts maßgeblichen geographischen Daten umfassende Verarbeitung der Positionsdaten einer oder mehrerer bestimmter Positionen des Fahrzeugs zu erzeugen.

Gemäß einem zweiten Aspekt der Erfindung wird eine Fahrzeugeinrichtung zur Mitführung in oder an einem Fahrzeug mit wenigstens einem dezentralen Prozessor zum Verarbeiten von Daten, wenigstens einem dezentralen Datenspeicher zum zumindest zeitweisen Speichern von Daten und wenigstens einer dezentralen Kommunikationseinrichtung zum dezentralseitigen Versand und Empfang von Daten bereitgestellt, wobei die Fahrzeugeinrichtung ausgebildet ist, (a) Positionsdaten von mehreren zeitlich aufeinanderfolgend bestimmten Positionen ihres jeweiligen Fahrzeugs mittels des dezentralen Prozessors zumindest zeitweise in dem dezentralen Datenspeicher zu speichern, und (b) in dem dezentralen Datenspeicher zumindest zeitweise gespeicherte Positionsdaten mittels der dezentralen Kommunikationseinrichtung an die zentrale Datenverarbeitungseinrichtung zu versenden, sowie durch ihre Ausbildung gekennzeichnet ist (c) zu wenigstens einem definierten Anlass wenigstens eine von der dezentralen Speicherauslastung ihres dezentralen Datenspeichers abhängige dezentrale Statusinformation mittels der dezentralen Kommunikationseinrichtung an die zentrale Datenverarbeitungseinrichtung zu versenden, (d) eine Übermittlungsanweisung von der zentralen Datenverarbeitungseinrichtung mittels der dezentralen Kommunikationseinrichtung zu empfangen und (e) von der dezentralen Menge an in ihrem dezentralen Datenspeicher zum Versand an die zentrale Datenverarbeitungseinrichtung gespeicherten Positionsdaten einen in der empfangenen Übermittlungsanweisung spezifizierten Umfang mittels der dezentralen Kommunikationseinrichtung an die zentrale Datenverarbeitungseinrichtung zu versenden.

Gemäß einem dritten Aspekt der Erfindung wird ein zentrale Datenverarbeitungseinrichtung mit wenigstens einem zentralen Prozessor zum Verarbeiten von Daten, wenigstens einem zentralen Datenspeicher zum zumindest zeitweisen Speichern von Daten und wenigstens einer zentralen Kommunikationseinrichtung zum zentralseitigen Empfang und Versand von Daten bereitgestellt, wobei die zentrale Datenverarbeitungseinrichtung ausgebildet ist, (a) jeweils von einer Fahrzeugeinrichtung versendete Positionsdaten zentralseitig mittels der zentralen Kommunikationseinrichtung zu empfangen und zumindest bis zu einer Verarbeitung durch den zentralen Prozessor im zentralen Datenspeicher zu speichern und (b) die empfangenen Positionsdaten mittels des zentralen Prozessors zu verarbeiten und wenigstens ein aus der Verarbeitung der empfangenen Positionsdaten resultierendes Verarbeitungsergebnis zu erzeugen, sowie durch ihre Ausbildung gekennzeichnet ist, (c) eine von einer dezentralen Speicherauslastung eines dezentralen Datenspeichers der Fahrzeugeinrichtung abhängige dezentrale Statusinformation von einer Fahrzeugeinrichtung zu empfangen, (d) wenigstens eine von der zentralen Auslastung der zentralen Datenverarbeitungseinrichtung abhängige zentrale Statusinformation zu erzeugen, (e) anhand der von.einer jeweiligen Fahrzeugeinrichtung empfangenen dezentralen Statusinformation und der erzeugten zentralen Statusinformation einen Umfang an von der jeweiligen Fahrzeugeinrichtung an die zentrale Datenverarbeitungseinrichtung zu übermittelnden Positionsdaten zu bestimmen, und (f) eine Übermittlungsanweisung mit dem bestimmten Umfang an die Fahrzeugeinrichtung zu versenden, von der sie die dezentrale Statusinformation empfangen hat.

Mit dem Positionsdatenübermittlungssystem gemäß dem ersten Aspekt der Erfindung werden eine zentrale Datenverarbeitungseinrichtung gemäß dem dritten Aspekt der Erfindung und mehrere Fahrzeugeinrichtungen gemäß dem zweiten Aspekt der Erfindung bereitgestellt.

Gemäß einem vierten Aspekt der Erfindung wird ein Verfahren zur Übermittlung von Positionsdaten von einer Mehrzahl von jeweils von einem Fahrzeug mitgeführten Fahrzeugeinrichtungen, die jeweils wenigstens einen dezentralen Prozessor zum Verarbeiten von Daten, wenigstens einen dezentralen Datenspeicher zum zumindest zeitweisen Speichern von Daten und wenigstens eine dezentrale Kommunikationseinrichtung zum dezentralseitigen Versand und Empfang von Daten aufweisen, an wenigstens eine zentrale Datenverarbeitungseinrichtung mit wenigstens einem zentralen Prozessor zum Verarbeiten von Daten, wenigstens einem zentralen Datenspeicher zum zumindest zeitweisen Speichern von Daten und wenigstens einer zentralen Kommunikationseinrichtung zum zentralseitigen Empfang und Versand von Daten bereitgestellt, wobei jede Fahrzeugeinrichtung (a) Positionsdaten von mehreren zeitlich aufeinanderfolgend bestimmten Positionen ihres jeweiligen Fahrzeugs mittels des dezentralen Prozessors aufgrund von in der Fahrzeugeinrichtung gespeicherten positionsdatenspezifischen Anweisungen empfängt, erzeugt und/ oder verarbeitet und zumindest zeitweise in dem dezentralen Datenspeicher speichert, und (b) in dem dezentralen Datenspeicher zumindest zeitweise gespeicherte Positionsdaten mittels der dezentralen Kommunikationseinrichtung an die zentrale Datenverarbeitungseinrichtung versendet, und die zentrale Datenverarbeitungseinrichtung (c) jeweils von einer Fahrzeugeinrichtung versendete Positionsdaten zentralseitig mittels der zentralen Kommunikationseinrichtung empfängt und zumindest bis zu einer Verarbeitung durch den zentralen Prozessor im zentralen Datenspeicher speichert, (d) die empfangenen Positionsdaten mittels des zentralen Prozessors verarbeitet und wenigstens ein aus der Verarbeitung der empfangenen Positionsdaten resultierendes Verarbeitungsergebnis erzeugt, dadurch gekennzeichnet, dass jede Fahrzeugeinrichtung (e) zu wenigstens einem definierten Anlass wenigstens eine von der dezentralen Speicherauslastung ihres jeweiligen dezentralen Datenspeichers abhängige dezentrale Statusinformation mittels der dezentralen Kommunikationseinrichtung an die zentrale Datenverarbeitungseinrichtung versendet, die zentrale Datenverarbeitungseinrichtung (f) die dezentrale Statusinformation von der jeweiligen Fahrzeugeinrichtung empfängt, (g) wenigstens eine von der zentralen Auslastung der zentralen Datenverarbeitungseinrichtung abhängige zentrale Statusinformation erzeugt, (h) anhand der von einer jeweiligen Fahrzeugeinrichtung empfangenen dezentralen Statusinformation und der erzeugten zentralen Statusinformation einen Umfang an von der jeweiligen Fahrzeugeinrichtung an die zentrale Datenverarbeitungseinrichtung zu übermittelnden Positionsdaten bestimmt, und (i) eine Übermittlungsanweisung mit dem bestimmten Umfang an die jeweilige Fahrzeugeinrichtung versendet, von der sie die dezentrale Statusinformation empfangen hat, und schließlich jeweils diejenige Fahrzeugeinrichtung, die die dezentrale Statusinformation an die zentrale Datenverarbeitungseinrichtung gesendet hat, (j) die für sie bestimmte Übermittlungsanweisung von der zentralen Datenverarbeitungseinrichtung mittels der dezentralen Kommunikationseinrichtung empfängt und (k) von der dezentralen Menge an in ihrem jeweiligen dezentralen Datenspeicher zum Versand an die zentrale Datenverarbeitungseinrichtung gespeicherten Positionsdaten den in der empfangenen Übermittlungsanweisung spezifizierten Umfang mittels der dezentralen Kommunikationseinrichtung an die zentrale Datenverarbeitungseinrichtung versendet.

Mit dem Positionsdatenübermittlungssystem gemäß dem ersten Aspekt der Erfindung wird ein System zur Durchführung des Verfahrens gemäß dem vierten Aspekt der Erfindung bereitgestellt.

Vorzugsweise erfolgt die Versendung der dezentralen Statusinformation von der Fahrzeugeinrichtung an die zentrale Datenverarbeitungseinrichtung im Rahmen einer bestehenden Kommunikationsverbindung zwischen der Fahrzeugeinrichtung und der zentralen Datenverarbeitungseinrichtung.
Vorzugsweise erfolgt die Versendung der Übermittlungsanweisung von der zentralen Datenverarbeitungseinrichtung an die Fahrzeugeinrichtung im Rahmen einer bestehenden Kommunikationsverbindung zwischen der Fahrzeugeinrichtung und der zentralen Datenverarbeitungseinrichtung.
Vorzugsweise erfolgt die Versendung der Positionsdaten von der Fahrzeugeinrichtung an die zentrale Datenverarbeitungseinrichtung im Rahmen einer bestehenden Kommunikationsverbindung zwischen der Fahrzeugeinrichtung und der zentralen Datenverarbeitungseinrichtung.
Vorzugsweise bleibt die zur Versendung der dezentralen Statusinformation eingerichtete Kommunikationsverbindung zwischen der Fahrzeugeinrichtung und der zentralen Datenverarbeitungseinrichtung ohne Unterbrechung solange bestehen, bis die Versendung der Positionsdaten von der Fahrzeugeinrichtung an die zentrale Datenverarbeitungseinrichtung erfolgt ist.

Alternativ kann die die Versendung der dezentralen Statusinformation von der Fahrzeugeinrichtung an die zentrale Datenverarbeitungseinrichtung, die Versendung der Übermittlungsanweisung von der zentralen Datenverarbeitungseinrichtung an die Fahrzeugeinrichtung und/ oder die Versendung der Positionsdaten von der Fahrzeugeinrichtung an die zentrale Datenverarbeitungseinrichtung verbindungslos erfolgen, beispielsweise im Rahmen einer SMS oder MMS.

Anhand eines Ausführungsbeispiels werden nachfolgend vorteilhafte Merkmale der Erfindung näher erläutert. Dazu zeigen
- Fig. 1: schematisch eine von mehreren erfindungsgemäßen Fahrzeugeinrichtungen,
- Fig. 2: schematisch ein erfindungsgemäßes Positionsdatenübermittlungssystem,
- Fig. 3a: ein Ablaufdiagramm für Schritte des erfindungsgemäßen Verfahrens, die von einer der erfindungsgemäßen Fahrzeugeinrichtungen durchgeführt werden, mit Aus- und Einsprungpunkten zu und von dem Ablaufdiagramm von Fig. 3b,
- Fig. 3b: ein Ablaufdiagramm für Schritte des erfindungsgemäßen Verfahrens, die von einer der erfindungsgemäßen zentralen Datenverarbeitungseinrichtung durchgeführt werden, mit Ein- und Aussprungpunkten von und zu dem Ablaufdiagramm von Fig. 3a und
- Fig. 5: eine Entscheidungsmatrix für erfindungsgemäße Bestimmungen des Umfangs von Positionsdaten, die von einer der erfindungsgemäßen Fahrzeugeinrichtungen an die erfindungsgemäße zentrale Datenverarbeitungseinrichtung zu übermitteln sind.

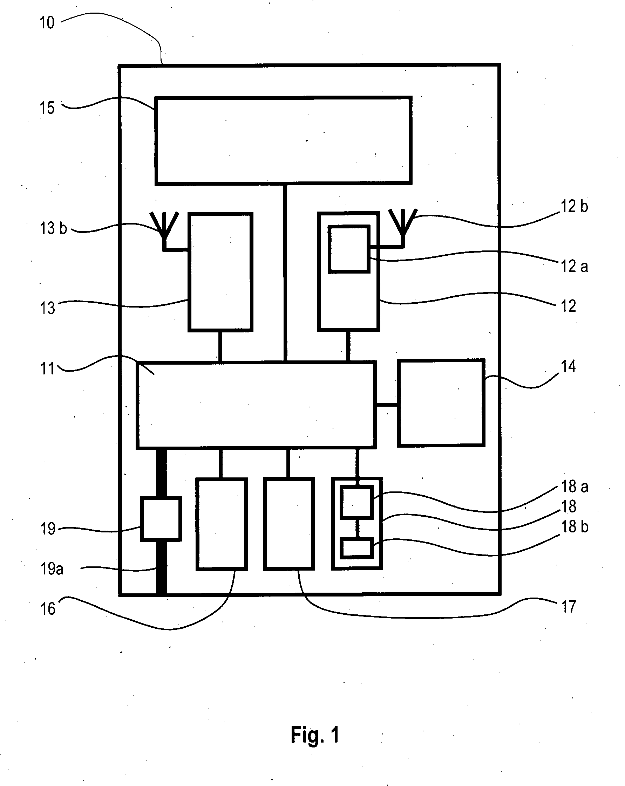

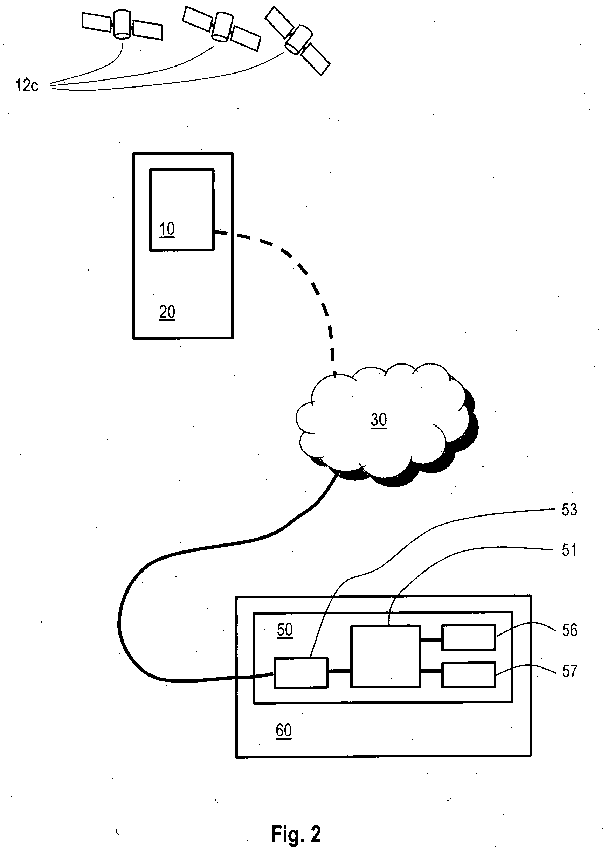

Eine als Fahrzeuggerät 10 ausgebildete Fahrzeugeinrichtung, die von einem Fahrzeug 20 (siehe Fig. 2) mitgeführt wird, ist stellvertretend für jede Fahrzeugeinrichtung der Mehrzahl von Fahrzeugeinrichtungen des erfindungsgemäßen Positionsdatenübermittlungssystems schematisch in Fig. 1 dargestellt. Sie weist einen dezentralen Prozessor 11 auf, der kommunikativ gekoppelt ist an eine GNSS-Positionsbestimmungseinrichtung 12, die einen GNSS-Empfänger 12a mit einer GNSS-Empfangsantenne 12b umfasst, über die Signale von mehreren GNSS-Satelliten 12c (in Fig. 2 dargestellt) empfangen werden, aus welchen die GNSS-Positionsbestimmungseinrichtung 12 fortlaufend - vorzugsweise im Sekundentakt - die Position des GNSS-Empfängers zumindest näherungsweise zum Zeitpunkt des Empfangs der GNSS-Satelliten-Signale berechnet. Fakultativ ist die GNSS-Positionsbestimmungseinrichtung 12 kommunikativ an weitere (nicht dargestellte) Sensoren gekoppelt, beispielsweise einen Geschwindigkeitssensor eines Fahrzeugs (beispielsweise ein Tachometer) und einen Bewegungsrichtungsänderungssensor (beispielsweise ein Gyroskop). Messwerte dieser Sensoren kann die GNSS-Positionsbestimmungseinrichtung 12 im Verfahren der sogenannten Koppelortung mit den vom GNSS-Empfänger 12a gelieferten GNSS-Signalen zu wenigstens einer Koppelortungs-Position verarbeiten, die genauer ist als die GNSS-Position. Insbesondere im Falle zeitweise z. B. durch Abschattung ausbleibender GNSS-Positionen kann damit trotz weiterer Bewegung über eine begrenzte Strecke/ Zeit eine Position im Zuge des sogenannten "dead reckoning" ermittelt werden. Optional oder alternativ kann auch der dezentrale Prozessor 11 kommunikativ an besagte Sensoren und/ oder andere Sensoren gleichen Typs wie besagte Sensoren gekoppelt sein, und die Koppelortung unter Verwendung der von der GNSS-Positionsbestimmungseinrichtung 12 bereitgestellten GNSS- und/ oder Koppelortungs-Positionen durchführen oder verbessern.
Unabhängig von ihrem Erzeugungsweg werden die von dem dezentralen Prozessor 11 empfangenen oder erzeugten GNSS- und/ oder Koppelortungs-Positionsdaten verallgemeinert als geographische Positionsdaten einer geographischen Position (im weiteren Verlauf kurz als "Position") bezeichnet. Diese Position gilt unabhängig von allfälligen Positionsbestimmungsfehlern als Fahrzeugposition, weil die GNSS-Positionsbestimmungseinrichtung 12, dessen Position bestimmt wird, von einem Fahrzeug mitgeführt wird. Die Positionsdaten umfassen für jede Position zumindest einen Longitudenwert (Längenkoordinatenwert) und einen Latitudenwert (Breitenkoordinatenwert). Damit ist die geographische Position des GNSS-Empfängers zumindest in der örtlich näherungsweise zwei-dimensionalen Ebene der Erdoberfläche im Rahmen der Genauigkeit des verwendeten Positionsbestimmungsverfahrens vorübergehend zumindest näherungsweise für den Zeitpunkt festgelegt, zu dem die GNSS-Signale empfangen wurden. Dieser Zeitpunkt kann durch das Zeitsignal, das im GNSS-Signal enthalten ist, oder durch das Zeitsignal einer Uhr 14 - beispielsweise einer Funkuhr -, die an den dezentralen Prozessor 11 gekoppelt ist, als Uhrzeit mit Datumsangabe ("Zeitstempel") spezifiziert werden und unter Bildung eines Positionsdatensatzes zu den geographischen Positionsdaten als ergänzende Information zu jeder geographischen Position hinzugefügt werden.
Zur Durchführung seiner Aufgaben wird auf dem Prozessor 11 ein Computerprogramm ausgeführt, welches zuvor in einem Daten-Schreib-Lese-Speicher 16 (beispielsweise ein EEPROM oder ein Flash-EEPROM) gespeichert wurde und durch das Betriebssystem des dezentralen Prozessors 11 zumindest abschnittsweise in den Arbeitsspeicher 17 (beispielsweise ein SDRAM) des dezentralen Prozessors 11 geladen wird, um für den dezentralen Prozessor 11 effizient verwendbar zu sein. Durch die Ausführung des Computerprogramms ist der dezentrale Prozessor 11 konfiguriert und mithin das Fahrzeuggerät eingerichtet, erfindungsgemäße Verfahrensschritte durchzuführen. Teile des Computerprogramms enthalten positionsdatenspezifische Anweisungen für den dezentralen Prozessor 11 zum Empfang, oder zur Erzeugung, gegebenenfalls zur Verarbeitung, jedenfalls zur Speicherung und zum Versand der Positionsdaten. Der dezentrale Prozessor 11 ist an ein Sicherheitsmodul 18 gekoppelt, das als eigenständige Datenverarbeitungseinheit (beispielsweise eine Chipkarte) ausgebildet ist, die wenigstens ein autonomes Steuermodul 18a und einen Speicherbereich 18b aufweist, wobei das autonome Steuermodul 18a bevorzugt dazu konfiguriert ist, Anfragen nach einer Herausgabe von Daten aus dem Speicherbereich 18b und/ oder der Änderung oder Aufnahme von Daten im Speicherbereich 18b nur gegen eine Authentifizierung auszuführen. Die Durchführung der Authentifizierungsprozedur kann durch die Analyse einer digitalen Signatur mittels eines vom Signierenden im Speicherbereich 18b des Sicherheitsmoduls 18 abgelegten öffentlichen Schlüssels erfolgen.
Anstelle des Sicherheitsmoduls 18 kann ein kryptographischer Datenspeicher (nicht dargestellt) vorgesehen sein, in den der Prozessor 11 Daten nur mit entsprechender Authentifizierung verschlüsselt ablegen kann und entschlüsselnd auslesen kann.
Die Fahrzeugkennung des Fahrzeugs 20 ist in Form des Fahrzeugkennzeichens, das von wenigstens einem Fahrzeugschild des Fahrzeugs 20 umfasst ist, im Speicherbereich 18b des Sicherheitsmoduls 18 oder kryptographischen Datenspeichers gespeichert. Alternativ kann die Fahrzeugkennung in dem Daten-Schreib-Lese-Speicher 16 gespeichert sein.
Die verschlüsselte Speicherung von Positionsdaten im Speicherbereich 18b des Sicherheitsmoduls 18 oder im kryptographischen Datenspeicher kann mittels entsprechender Anweisungen durch den dezentralen Prozessor 11 durchgeführt werden. Alternativ oder kumulativ kann die Speicherung von Positionsdaten durch den dezentralen Prozessor 11 auch im Arbeitsspeicher 17 und/ oder im Daten-Schreib-Lese-Speicher 16 erfolgen.
In Falle dieses Ausführungsbeispiels werden zeitlich aufeinanderfolgend bestimmte Positionsdaten, die der dezentrale Prozessor 11 von der Positionsbestimmungseinrichtung 13 empfängt, durch den dezentralen Prozessor aufeinanderfolgend im Daten-Schreib-Lese-Speicher 16 in Form einer Flash-Disk gespeichert, bis die Menge an Positionsdaten ausreicht, um eine Fahrspurdatei zu vervollständigen. Die Fahrspurdatei umfasst Positionsdaten einer Fahrspur einer Länge von typischerweise 10 km bis 300 km. Im Falle dieses Ausführungsbeispiels umfasst die Fahrspurdatei vorbestimmt eine Fahrspur von 50 km Länge, was etwa 50 kB an Positionsdaten ausmacht. Dabei können die Positionsdaten als Voll-Positionsdaten (absolute Längen- und Breitengradwerte) oder als Differenz-Positionsdaten (relative Längen- und Breitengradwerte) ausgehend von einer absoluten Ursprungsposition gespeichert sein. Der zweite Speichermodus spart Speicherplatz.
Ist die Fahrspurdatei vollständig, so weist der dezentrale Prozessor 11 das autonome Steuermodul 18a des Sicherheitsmoduls 18 an, die vollständige Fahrspurdatei im Speicherbereich 18b des Sicherheitsmoduls 18 abzulegen. Infolge einer Bestätigung vom autonomen Steuermodul 18a des Sicherheitsmoduls 18 über die erfolgte Speicherung der vollständigen Fahrspurdatei im Speicherbereich 18b des Sicherheitsmoduls 18 löscht der dezentrale Prozessor die Positionsdaten der vollständigen Fahrspurdatei, insbesondere die vollständige Fahrspurdatei selbst, aus dem Arbeitsspeicher 17.
Eine Anzeigeeinrichtung 15 kann Nachrichten des dezentralen Prozessors 11 in graphischer Form oder Textform wiedergeben. Eine nicht darstellte Eingabeeinrichtung (die auch von der Anzeigeeinrichtung 15 umfasst oder bereitgestellt sein kann) dient zur Aufnahme von Daten und Befehlen eines Nutzers an den dezentralen Prozessor.
Darüber hinaus umfasst das Fahrzeuggerät einen Mobilfunk-Sendeempfänger 13, beispielsweise in Form eines GSM-UMTS- oder LTE-Moduls, mit einer Mobilfunk-Antenne 13a. Der Mobilfunk-Sendeempfänger 13 wird durch den dezentralen Prozessor 11 angewiesen, durch das Fahrzeuggerät 10 erzeugte Positionsdaten an eine Stelle zu senden, die der dezentrale Prozessor 11 vorgibt.
Unter Verweis auf Fig. 2 erfolgt die Versendung der Positionsdaten vom Fahrzeuggerät 10 mittels des Mobilfunk-Sendeempfängers 13 über ein Mobilfunknetz 30 an eine Mautzentrale 60, die eine zentrale Datenverarbeitungseinrichtung 50 mit einer zentralen Kommunikationseinrichtung 53 zum Empfang der Positionsdaten, einen zentralen Prozessor 51 zur Verarbeitung der empfangenen Positionsdaten und zur Erzeugung wenigstens eines aus der Verarbeitung der empfangenen Positionsdaten resultierendes Verarbeitungsergebnis sowie als Arbeitsspeicher einen ersten Datenspeicher 56 zur zumindest zeitweiligen Aufnahme der Positionsdaten, die der Prozessor gerade verarbeitet, und zur zumindest zeitweiligen Speicherung von Anweisungen zur Verarbeitung der Positionsdaten und als Daten-Schreib-Lese-Speicher eine zweiten Datenspeicher 57, beispielsweise in Form einer Festplatte, aufweist, in dem die Positionsdaten gespeichert werden solange sie noch nicht vom zentralen Prozessor 51 zur Erzeugung zur Erzeugung des wenigstens einen aus der Verarbeitung der empfangenen Positionsdaten resultierenden Verarbeitungsergebnisses verarbeitet werden.
Der zentrale Prozessor 51 verarbeitet die empfangenen Positionsdaten zu wenigstens einem Datenverarbeitungsergebnis, beispielsweise mit oder ohne Information der Fahrzeugkennung zu einer Kennung eines Streckenabschnittes, zu einer Reihe von Kennungen mehrerer mautpflichtiger Streckenabschnitte, mit Information mautrelevanter Parameter (z. B. Achszahl, zulässiges Gesamtgewicht, Schadstoffklasse) des Fahrzeugs 20 zu einer Mautgebühr oder zu einer Reihe mehrerer Mautgebühren, und veranlasst die Speicherung des Datenverarbeitungsergebnisses zugeordnet zu der Fahrzeugkennung des Fahrzeugs 20 oder unzugeordnet in dem zweiten Datenspeicher 57 oder einem nicht dargestellten dritten Datenspeicher.
Im Fahrzeuggerät 10 versorgt eine wiederaufladbare Batterie 19 die genannten Komponenten des Fahrzeuggerätes 10 mit elektrischem Strom. Des weiteren ist ein Stromversorgungsanschluss 19a vorgesehen, über den die wiederaufladbare Batterie 19 wieder aufgeladen werden kann und/ oder die genannten Komponenten des Fahrzeuggerätes 10 unabhängig von der wiederaufladbaren Batterie 19 mit elektrischem Strom von einer Stromquelle des Fahrzeugs 20 versorgt werden können.
Alternativ kann anstatt der wiederaufladbaren Batterie 19 auch ein Superkondensator 19 vorgesehen sein, der den Betrieb des Fahrzeuggeräts 10 auch bei einem Verlust der Stromversorgung über den Stromversorgungsanschluss 19a noch eine Zeitlang aufrecht erhalten kann.
Optional umfasst das Fahrzeuggerät 10 eine DSRC-Kommunikationseinrichtung (nicht dargestellt) zur DSRC-Kommunikation mit straßenseitigen Kontrolleinrichtungen (DSRC = dedicated short-range communication) und/oder Schnittstellen (z. B. CAN, USB, bluetooth, W-LAN) zur kurzreichweitigen Kommunikation (ebenfalls nicht dargestellt) mit anderen im Fahrzeug mitgeführten Komponenten (ebenfalls nicht dargestellt), beispielsweise ein Mobiltelefon, eine elektronische Identifizierungskarte, ein Navigationssystem.

Anstelle des Fahrzeuggerätes 10 kann auch eine Fahrzeugeinrichtung mit über das Fahrzeug verteilten Komponenten des Fahrzeuggerätes 10 vorgesehen sein, die über Kommunikationsschnittstellen zumindest zeitweise wenigstens zur Übertragung von Daten mit zumindest dem dezentralen Prozessor 11 in Verbindung stehen.
Beispielsweise können - in nicht dargestellten alternativen Ausführungsvarianten - die Funkuhr 14, die GNSS-Positionsbestimmungseinrichtung 12 und/ oder der Mobilfunk-Sendeempfänger 13 außerhalb des Fahrzeuggerätes 10 fest im Fahrzeug 20 eingebaut sein, während das Fahrzeuggerät 10 ohne die Funkuhr 14, die GNSS-Positionsbestimmungseinrichtung 12 und/ oder der Mobilfunk-Sendeempfänger 13 zu umfassen fest im Fahrzeug 20, lösbar im oder am Fahrzeug 20 befestigt oder unbefestigt im Fahrzeug 20 angeordnet sein kann. In diesem Fall sind das Fahrzeuggerät 10 einerseits und die Funkuhr 14, die GNSS-Positionsbestimmungseinrichtung 12 und/ oder der Mobilfunk-Sendeempfänger 13 andererseits über eine Kommunikationsverbindung miteinander gekoppelt. Über eine solche Kommunikationsverbindung kann beispielsweise die GNSS-Positionsbestimmungseinrichtung 12 durch das Fahrzeuggerät 10 ein- und ausgeschaltet werden und/ oder zur Übertragung von erfassten Positionsdaten an das Fahrzeuggerät 10 aufgefordert werden. Die Kommunikationsverbindung kann durch eine Kabelverbindung (z. B. über den CAN-Bus des Fahrzeugs 20) oder drahtlos mit entsprechenden Sende- und Empfangseinrichtungen in Fahrzeuggerät 10 und Funkuhr 14, GNSS-Positionsbestimmungseinrichtung 12 und/ oder Mobilfunk-Sendeempfänger 13 bereitgestellt sein.

Der Mobilfunk-Sendeempfänger 13 des Fahrzeuggeräts 10 dient auch dem Empfang von positionsdatenspezifischen
Anweisungen für den dezentralen Prozessor11 des Fahrzeuggeräts 10, die bei Ausführung durch den dezentralen Prozessor 11 den dezentralen Prozessor zum Empfang, zur Erzeugung, zur Verarbeitung, zur Speicherung und/ oder zum Versand der Positionsdaten konfigurieren, wobei diese positionsdatenspezifischen Anweisungen von der zentralen Datenverarbeitungseinrichtung 50 an jedes Fahrzeuggerät 10 versendet werden - entweder mittels der zentralen Kommunikationseinrichtung 53 oder mit einer anderen, nicht dargestellten zentralen Kommunikationseinrichtung.

Es wird darauf hingewiesen, dass die zentrale Datenverarbeitungseinrichtung 50 in Fig. 2 nur vereinfacht dargestellt ist. In der Praxis kann die zentrale Datenverarbeitungseinrichtung mehrere zentrale Kommunikationseinrichtungen und mehrere zentrale Prozessoren aufweisen, die jeweils an zentrale Datenspeicher der besagten Typen von zentralen Datenspeichern 56 und 57 gekoppelt sind.
Der Daten-Schreib-Lese-Speicher 57 kann der Arbeitsspeicher eines übergeordneten Servers der zentralen Datenverarbeitungseinrichtung 50 sein, auf den mehrere Personal-Computer, die jeweils einen zentralen Prozessor 51 und einen Arbeitsspeicher 56 aufweisen, zugreifen, wobei in diesem Fall der übergeordnete Server als Teil der zentralen Kommunikationseinrichtung 53 aufgefasst werden kann.
Im ersten zentralen Datenspeicher 56 werden die von den Fahrzeuggeräten 10 empfangenen Positionsdaten in Verknüpfung mit einer Kennung desjenigen Fahrzeuggerätes 10, von dem sie stammen, zumindest bis zur ihrer Verarbeitung und zur Erzeugung des aus der Verarbeitung der empfangenen Positionsdaten resultierenden Verarbeitungsergebnisses gespeichert.
Im zweiten zentralen Datenspeicher 57 werden die resultierenden Verarbeitungsergebnisse - hier befahrene Streckenabschnitte und/ oder fällige Mautgebühren - in Verknüpfung mit einer Kennung desjenigen Fahrzeuggerätes 10 gespeichert, von dem die Positionsdaten stammen, die dem Verarbeitungsergebnis zugrunde lagen.

Nach der Speicherung des Verarbeitungsergebnisses in dem zweiten zentralen Datenspeicher 57 werden die mit der Kennung desjenigen Fahrzeuggerätes 10 verknüpften Positionsdaten aus dem ersten zentralen Datenspeicher 56 gelöscht, um Speicherplatz für die Speicherung weiterer Positionsdaten insbesondere von anderen Fahrzeuggeräten zurückzugewinnen.
Selbstverständlich können die Positionsdaten im ersten zentralen Datenspeicher 56 auch anonym ohne eine Verknüpfung mit der Kennung eines Fahrzeuggerätes 10 gespeichert werden, wobei erst das Verarbeitungsergebnis mit der Kennung des Fahrzeuggerätes verknüpft wird. Derartige Verfahren zur anonymisierten Verarbeitung von Positionsdaten sind aus dem Stand der Technik bekannt.
Komponenten von zentralen Kommunikationseinrichtungen können zusammen mit mehreren zentralen Prozessoren in einem Netzwerk der zentralen Datenverarbeitung integriert und gekoppelt sein, welches über eine oder mehrere Schnittstellen zu dem Mobilfunknetz 30 verfügt.
Beispielsweise kann ein von der zentralen Datenverarbeitungseinrichtung 50 umfasstes Gateway als Content Switch einen Kommunikationskanal zu dem Mobilfunknetz 30 auf mehrere inhaltsspezifische Kommunikationskanäle im Netzwerk der zentralen Datenverarbeitungseinrichtung 50 aufteilen, die jeweils ihrerseits über eine Firewall an einen Router oder Load-Balancer gekoppelt sind, von dem aus eine Vielzahl von zentralen Prozessoren Positionsdaten von einer Vielzahl von Fahrzeuggeräten 10 gleichzeitig empfangen. Die einem zentralen Prozessor 51 zugeordnete zentrale Kommunikationseinrichtung 53, welche jeweils im Kommunikationspfad des zentralen Prozessors 51 mit dem Mobilfunknetz 30 liegt ist in diesem Fall das Gateway.
Einrichtungen zur Erfassung der zentralen Auslastung und der Erzeugung der für die zentrale Auslastung der zentralen Datenverarbeitungseinrichtung 50 indikativen zentralen Statusinformation der zentralen Datenverarbeitungseinrichtung 50 können durch die zentralen Prozessoren vom Typ des zentralen Prozessors 50 gebildet sein, soweit es um die Erfassung der zentralen Speicherauslastung und/ oder der zentralen Prozessorauslastung geht. Ein übergeordneter Prozessor kann ausgebildet sein, die von mehreren zentralen Prozessoren 51 erfassten individuellen Speicher- und/ oder Prozessorauslastungen zu empfangen und daraus einen Mittelwert, einen Medianwert oder einen Maximalwert der empfangenen individuellen Speicher- und/oder Prozessorauslastungen zu ermitteln.
Einrichtungen zur Erfassung einer zentralen Kommunikationsauslastung bezüglich des Empfangs von Positionsdaten und/ oder des Versands von positionsdatenspezifischen Anweisungen können durch einen Prozessor der zentralen Kommunikationseinrichtung 53 und/ oder einen an die zentrale Kommunikationseinrichtung 53 angeschlossenen Prozessor gebildet werden, beispielsweise den zentralen Prozessor 51.

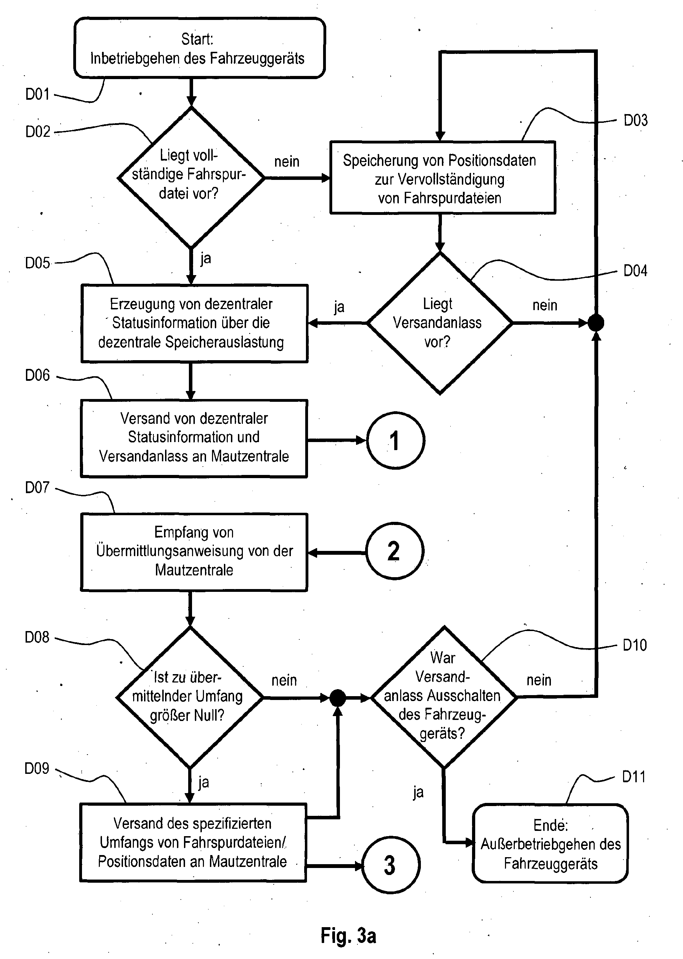

Das Fahrzeuggerät 10 ist ausgebildet, die in Fig. 3a gezeigten Verfahrensschritte durchzuführen. Zunächst geht das Fahrzeuggerät 10 gemäß Schritt D01 in Betrieb, beispielsweise, indem das Fahrzeuggerät 10 über den Stromversorgungsanschluss 19a elektrischen Strom von einer Stromquelle des Fahrzeugs 20 erhält, indem das Fahrzeuggerät 10 von einem Benutzer eingeschaltet wird, oder indem das Fahrzeuggerät 10 aufgrund eines vorgegebenen Ereignisses (beispielsweise der Detektion einer Fahrzeugbewegung) aus einem Passivzustand in einen Aktivzustand übergeht, in dem es die weiteren Verfahrensschritte ausführen kann.
Sodann prüft der Prozessor 11 des Fahrzeuggeräts 10, ob ein dem Speicherbereich 18b des Sicherheitsmoduls eine vollständige Fahrspurdatei vorliegt, die während der vorangegangen Betriebsphase nicht an die Mautzentrale 60 übermittelt wurde (Schritt D02). Ist dies nicht der Fall, so gibt es keinen Grund für das Fahrzeuggerät 10, mit der Zentrale zur Übermittlung einer Fahrspurdatei in Verbindung zu treten, und das Fahrzeuggerät erfasst weiter Positionsdaten mit dem Ziel die angefangene Fahrspurdatei zu vervollständigen (Schritt D03). Liegt daraufhin bei Vorliegen wenigstens einer vollständigen Fahrspurdatei ein Anlass für den Versand der Fahrspurdatei(en) vor (Schritt D04), so wird im Schritt D05 eine dezentrale Statusinformation über die dezentrale Auslastung des Speicherbereichs 18b mit Positionsdaten in Form der Anzahl von zum Versand im Speicherbereich 18b vorliegenden Fahrspurdateien erzeugt.
Alternativ oder kumulativ kann die dezentrale Statusinformation auch in Form von Bruchteilen oder Vielfachen einer dezentralen Schwellenauslastung bereitgestellt werden, die beispielsweise 80% belegtem Speicherplatz im Speicherbereich 18b entspricht. Damit stehen über die dezentrale Schwellenauslastung hinaus immer noch bis zu 20% Speicherplatz im Speicherbereich 18b zur Vervollständigung zumindest einer neu eröffneten Fahrspurdatei zu Verfügung, nachdem das Fahrzeuggerät als Versandanlass das Überschreiten einer bestimmten Anzahl an Fahrpurdateien festgestellt hat, deren Speicherbedarf an die Schwellenauslastung heranreicht oder diese sogar überschreitet.
In den Schritt D05 mündet das Verfahren auch bei Bejahung der Abfrage in Schritt D02. Insofern ist die Inbetriebsetzung des Fahrzeuggerätes 10 in Schritt D01 einer der Anlässe, zu denen eine dezentrale Statusinformation gemäß Schritt D06 an die zentrale Datenverarbeitungseinrichtung 50 versandt wird. Die Versendung der dezentralen Statusinformation erfolgt in diesem Schritt mittels des Mobilfunk-Sendeempfängers 13 des Fahrzeuggerätes 10 zusammen mit einer Information über den Versandanlass sowie einer Kennung des Fahrzeuggerätes, nachdem der dezentrale Prozessor den Mobilfunk-Sendeempfänger 13 angewiesen hat, durch Anwählen der zentralen Kommunikationseinrichtung 53 den Aufbau einer Kommunikationsverbindung mit der zentralen Datenverarbeitungseinrichtung 50 einzurichten und ihr die entsprechenden Daten zur Verfügung gestellt hat.
Über den Mobilfunk-Sendeempfänger erfolgt auch der Empfang der Übermittlungsanweisung von der Zentrale Datenverarbeitungseinrichtung 50 im Schritt D07. Der dezentrale Prozessor 11 prüft im nachfolgenden Schritt D08, ob der in der Übermittlungsanweisung spezifizierte Umfang von Null verschieden ist. Ist er verschieden von Null (wobei negative Umfänge ausgeschlossen werden), so weist der Prozessor 11 des Fahrzeuggeräts 10 den Mobilfunk-Sendeempfänger 13 des Fahrzeuggerätes 10 an, Positionsdaten im spezifizierten Umfang - in diesem Fall eine spezifizierte Anzahl an Fahrspurdateien - an die zentrale Datenverarbeitungseinrichtung 50 zu übermitteln, mit dem Ergebnis, dass der spezifizierte Umfang an Fahrspurdateien (und damit Positionsdaten) an die Mautzentrale versendet wird (Schritt D09) und das Fahrzeuggerät den nachfolgend erläuterten Schritt D10 ausführt.
Ergibt die Prüfung in Schritt D08, dass der zu übermittelnde spezifizierte Umfang gleich Null ist, so wird ohne Umweg über den Schritt D09 direkt im Schritt D10 geprüft, ob der Versandanlass ein Ausschalten des Fahrzeuggerätes 10 war, wobei mit Ausschalten die Initiierung eines Prozesses gemeint ist, an dessen Ende das Fahrzeuggerät 10 zumindest vorübergehend außer Betrieb geht, indem es zumindest vorübergehend die Speicherung von Positionsdaten zur Vervollständigung von Fahrspurdateien einstellt. War der Versandanlass tatsächlich das Ausschalten des Fahrzeuggerätes 10, so endet das Verfahren mit dem zuvor erläuterten Außerbetriebgehen des Fahrzeuggerätes in Schritt D11. Andernfalls bleibt das Fahrzeuggerät 10 in Betrieb und fährt gemäß Schritt D03 mit der Erfassung und Speicherung erfasster Positionsdaten zur Vervollständigung von Fahrspurdateien fort.

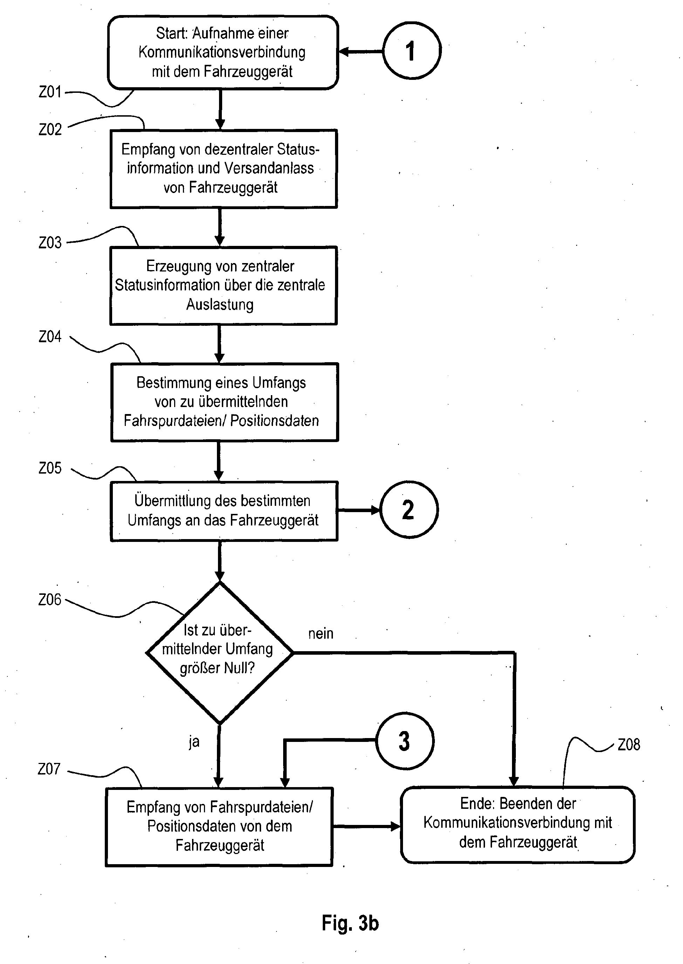

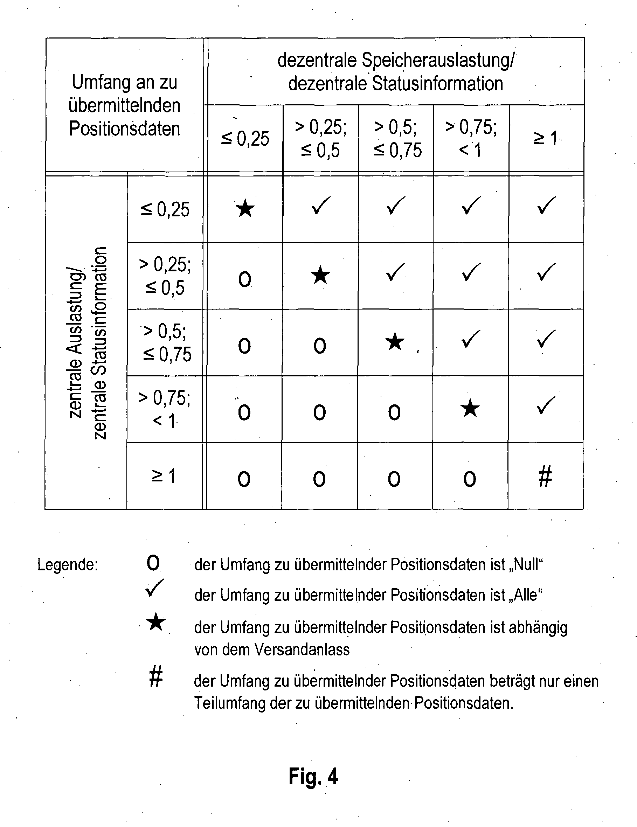

Über die Aussprungpunkte 1 von Schritt D06 und 3 von Schritt D09 sowie den Einsprungpunkt 2 von Schritt D07 sind die dezentralen Verfahrensschritte des erfindungsgemäßen Verfahrens im Fahrzeuggerät 10 an zentrale Verfahrensschritte des erfindungsgemäßen Verfahrens in der zentralen Datenverarbeitungseinrichtung 50 gekoppelt, die nachfolgend beschrieben werden:
Die Mautzentrale ist ausgebildet, die in Fig. 3b gezeigten Verfahrensschritte durchzuführen. Durch die Anwahl der zentralen Datenverarbeitungseinrichtung 50 durch ein Fahrzeuggerät 10 geht die zentrale Datenverarbeitungseinrichtung 50 über ihre zentrale Kommunikationseinrichtung 53 eine Kommunikationsverbindung ein - beispielsweise, nachdem ein RADIUS-Server der zentralen Datenverarbeitungseinrichtung 50 die Einrichtung einer Kommunikationsverbindung zwischen Fahrzeuggerät 10 und zentralem Prozessor 51 (beispielsweise über ein GGSN des Mobilfunkbetreibers und ein Gateway 53 der zentralen Datenverarbeitungseinrichtung 50) nach erfolgter Authentifizierung autorisiert (Schritt Z01). Im folgenden Schritt Z02 empfängt der zentrale Prozessor 51 der Mautzentrale 50 die dezentrale Statusinformation in Form der Anzahl von zum Versand im Speicherbereich 18b des Fahrzeuggerätes 10 vorliegenden Fahrspurdateien. Des Weiteren erzeugt die zentrale Datenverarbeitungseinrichtung 50 (sei es der zentrale Prozessor 51 oder ein anderer zentraler Prozessor der zentralen Datenverarbeitungseinrichtung 50) eine zentrale Statusinformation über die zentrale Auslastung der zentrale Datenverarbeitungseinrichtung 50 (Schritt Z03). In welcher Form diese zentrale Statusinformation vorliegen kann, wurde bereits im allgemeinen Beschreibungsteil beschrieben.
In einem alternativen Ausführungsbeispiel kann die zentrale Statusinformation unabhängig von dem Empfang der dezentralen Statusinformation (insbesondere vor dem Empfang der dezentralen Statusinformation) bestimmt werden, beispielsweise regelmäßig im Takt von einer Sekunde bis zu einer Stunde.
Im darauffolgenden Schritt Z04 wird anhand der zentralen Statusinformation und anhand der dezentralen Statusinformation bestimmt, in welchem Umfang das Fahrzeuggerät 10 Positionsdaten in Form von Fahrspurdateien an die zentrale Datenverarbeitungseinrichtung 50 übermitteln soll. Dazu vergleicht ein zentraler Prozessor der zentralen Datenverarbeitungseinrichtung 50 den Wert der zentralen Auslastung, der in der zentralen Statusinformation enthalten ist, mit einem Schwellwert der zentralen Auslastung, bei dessen Überschreitung eine Übermittlung von Positionsdaten nur noch im Ausnahmefall und nur noch im begrenzten Umfang zulässig ist. Beispielsweise kann der Schwellwert der zentralen Auslastung 90% vom Wert der vollständigen (100%-igen) zentralen Auslastung betragen. Insofern können die Werte der zentralen Auslastung auch in Bruchteilen oder Vielfachen der zentralen Schwellenauslastung ermittelt werden. In einer Weiterbildung dieses Ausführungsbeispiels ist der Schwellwert der zentralen Auslastung abhängig von der Anzahl an zeitlich parallelen Verbindungen mit mit Software zu versorgenden Fahrzeuggeräten, über die jeweils positionsdatenspezifischen Anweisungen für den dezentralen Prozessor 11 zum Empfang, oder zur Erzeugung, gegebenenfalls zur Verarbeitung, jedenfalls zur Speicherung und zum Versand der Positionsdaten an das jeweilige mit Software zu versorgende Fahrzeuggerät übertragen werden. Sind beispielsweise 40% der Kommunikationsverbindungen mit derartigen Software-Updates oder -Erstausstattungen belegt, so bleiben abzüglich einer Kapazitätsreserve für eine zusätzliche Software-Verteilung von 10% und einer Kapazitätsreserve von 10% für die ausnahmsweise Entgegennahme von Positionsdaten 40% an Kommunikationsverbindungen für die reguläre Entgegennahme von Positionsdaten übrig, was als alternativer Schwellwert in der zentralen Datenverarbeitungseinrichtung 50 dynamisch in Abhängigkeit von dem Anteil von mit Software-Verteilung belegten Kommunikationsverbindungen gespeichert wird, wenn ein Software-Verteilungsprozess von der zentralen Datenverarbeitungseinrichtung 50 durchgeführt wird (die Übermittlung des bestimmten Umfangs an zu übermittelnden Positionsdaten ist in diesem Sinne keine Software-Verteilung).
Abhängig von dem Wert der zentralen Auslastung und der dezentralen Speicherauslastung bestimmt die zentrale Datenverarbeitungseinrichtung 50 den zu übermittelnden Positionsdatenumfang (Schritt Z04). Welche Ergebnisse hinsichtlich des bestimmten Umfangs abhängig von welchen dezentralen und zentralen Statusinformationen dabei auftreten können, wird untenstehend anhand der Fig. 4 beispielhaft erläutert.

Im darauffolgenden Schritt Z05 wird der bestimmte Umfang an das Fahrzeuggerät 10 übermittelt. Danach prüft die zentrale Datenverarbeitungseinrichtung 50 ob der zu übermittelnde Umfang von Null verschieden ist, wobei Werte kleiner als Null ausgeschlossen werden. Ist das Ergebnis dieser Prüfung positiv, so wartet die zentrale Datenverarbeitungseinrichtung 50 im Schritt Z07 auf den Empfang der Fahrspurdateien entsprechend des bestimmten Umfangs von dem Fahrzeuggerät 10. Nach dem Empfang der entsprechenden Menge an Fahrspurdateien beendet die zentrale Datenverarbeitungseinrichtung 50 die Kommunikationsverbindung mit dem Fahrzeuggerät 10 (Schritt Z08). Diesen Schritt nimmt die zentrale Datenverarbeitungseinrichtung ohne den Umweg über Schritt Z07 auch dann vor, wenn die Prüfung in Schritt Z06, ob der ermittelte zu übermittelnde Umfang an Positionsdaten gleich Null ist (wobei Werte kleiner als Null ausgeschlossen werden). Denn in diesem Fall erwartet die zentrale Datenverarbeitungseinrichtung 50 keine Positionsdaten von dem Fahrzeuggerät 10.
In einer alternativen, nicht dargestellten, Variante beendet das Fahrzeuggerät 10 die Kommunikationsverbindung mit der zentralen Datenverarbeitungseinrichtung 50 im Anschluss an Schritt D08 (negatives Ergebnis) oder im Anschluss an Schritt D09 (positives Ergebnis im Schritt D08), wenn es keine Positionsdaten übermitteln soll, den zu übermittelnden Umfang an Positionsdaten übermittelt hat oder eine Quittung über den Erhalt der Positionsdaten erhalten hat, die von der zentralen Datenverarbeitungseinrichtung 50 im Anschluss an Schritt Z07 an das Fahrzeuggerät 10 versendet wird.
Nicht dargestellt sind in Fig. 3b die weiteren Verfahrensschritte der Speicherung der Positionsdaten in einem ersten zentralen Datenspeicher 56, die Verarbeitung der gespeicherten Positionsdaten und die Erzeugung eines aus der Verarbeitung der empfangenen Positionsdaten resultierendes Verarbeitungsergebnisses durch den zentralen Prozessor 51 sowie die Speicherung des Verarbeitungsergebnisses in einem zweiten zentralen Datenspeicher 57.

Fig. 4 gibt ein Beispiel für mögliche Ergebnisse von Umfängen an zu übermittelnden Positionsdaten in Abhängigkeit von einer zentralen Statusinformation in Form einer zentralen Auslastung als Bruchteil oder Vielfachem einer zentralen Schwellenauslastung und in Abhängigkeit von einer dezentralen Statusinformation in Form einer dezentralen Speicherauslastung als Bruchteil oder Vielfachem einer dezentralen Schwellenauslastung. Im Falle einer geringen zentralen Auslastung von weniger als 25% der zentralen Schwellenauslastung werden bei einer dezentralen Speicherauslastung von mehr als 25% der dezentralen Schwellenauslastung stets alle Positionsdaten angefordert. Dabei ist es nicht nötig, dass der zentralen Datenverarbeitungseinrichtung 50 eine Information darüber vorliegt, wie viele Fahrspurdateien "alle" Fahrspurdateien bedeuten. Vorzugsweise ist jedoch die Anzahl der in dem Speicherbereich 18b des Fahrzeuggerätes 10 aufgrund der übermittelten Kennung oder einer sonstigen Information über das Fahrzeuggerät 10 aus der dezentralen Speicherauslastung ermittelbar, wenn unter der Kennung oder der sonstigen Information über das Fahrzeuggerät die dezentrale Schwellenauslastung in Form einer maximalen Anzahl an Fahrspurdateien oder in Form einer Speicherplatzmenge (z. B. in Einheiten von Byte) in einem zentralen Datenspeicher der zentralen Datenverarbeitungseinrichtung 50 vorliegt.
Mit der Höhe der zentralen Auslastung nimmt die für eine Übermittlung aller Positionsdaten/ Fahrspurdateien erforderliche dezentrale Speicherauslastung zu. Je geringer die dezentrale Speicherauslastung ist, desto geringer muss auch die zentrale Auslastung sein, damit ein von Null verschiedener Umfang an zu übermittelnden Positionsdaten von der zentralen Datenverarbeitungseinrichtung angefordert wird. Ist die zentrale Auslastung größer als die zentrale Schwellenauslastung, so wird nur bei einer dezentralen Speicherauslastung von größer als 100% ein von Null verschiedener Umfang angefordert. Ist die dezentrale Speicherauslastung größer als die zentrale Auslastung, so wird stets ein von Null verschiedener Umfang angefordert.

Im Falle von im Rahmen von vorgegebenen Grenzen oder Abweichungen übereinstimmender zentraler und dezentraler Auslastungen analysiert die zentrale Datenverarbeitungseinrichtung zusätzlich den Versandanlass der dezentralen Statusinformation:
Ist der Versandanlass das erneute Einschalten des Fahrzeuggerätes 10, so kann die zentrale Datenverarbeitungseinrichtung 50 in Abhängigkeit von der Zeitspanne, die vom letzten Ausschalten bis zum erneuten Einschalten vergangen ist, bestimmen dass der zu übermittelnde Umfang Null (kleine.Zeitspanne von weniger als einem Tag), 10 bis 90 % des Gesamtumfangs (mittlere Zeitspanne von 1 bis 9 Tagen) oder 100% des Gesamtumfangs (lange Zeitspanne von 10 und mehr Tagen) an im Fahrzeuggerät 10 gespeicherten Fahrspurdateien beträgt.
Ist der Versandanlass der Versuch nach x vergeblichen Versuchen, Positionsdaten zu übermitteln, so kann die zentrale Datenverarbeitungseinrichtung 50 in Abhängigkeit von der Anzahl x der vergeblichen Übermittlungsversuche bestimmen, dass der zu übermittelnde Umfang Null (erster Übermittlungsversuch, x = 0), 50 % des Gesamtumfangs (zweiter Übermittlungsversuch, x = 1) oder 100% des Gesamtumfangs (dritter Übermittlungsversuch, x = 2) an im Fahrzeuggerät 10 gespeicherten Fahrspurdateien beträgt.
Ist der Versandanlass die bevorstehende mögliche Fahrt in das angrenzende Ausland oder ein angrenzendes Mautgebiet eines mit einer anderen Mautzentrale, an die Positionsdaten zu übermitteln wären, wobei das Fahrzeuggerät diese Fahrt selbst durch Vergleich der erfassten Positionsdaten mit einer geometrischen Figur, die den Randbereich des Staates oder des Mautgebietes repräsentiert, ermittelt hat, so kann zentrale Datenverarbeitungseinrichtung 50 bestimmen, dass bei einem solchen Versandanlass der Umfang an zu übermittelnden Positionsdaten stets "Alle" ist.

### Bezugszeichenliste

- 10: Fahrzeuggerät
- 11: dezentraler Prozessor
- 12: GNSS-Positionsbestimmungseinrichtung
- 12a: GNSS-Empfänger
- 12b: GNSS-Empfangsantenne
- 12c: GNSS-Satellit
- 13: Mobilfunk-Sendeempfänger (fahrzeugseitig)
- 13b: Mobilfunk-Antenne (fahrzeugseitig)
- 14: Funkuhr
- 15: Anzeigeeinrichtung
- 16: Daten-Schreib-Lese-Speicher
- 17: Arbeitsspeicher
- 18: Sicherheitsmodul
- 18a: autonomes Steuermodul des Sicherheitsmoduls 18
- 18b: Speicherbereich der Sicherheitsmoduls 18
- 19: Stromversorgungsanschluss
- 19a: Batterie, Superkondensator
- 20: Fahrzeug
- 30: Kommunikationsnetz
- 50: zentrale Datenverarbeitungseinrichtung
- 51: zentraler Prozessor
- 53: zentrale Kommunikationseinrichtung
- 56: erster zentraler Datenspeicher
- 57: zweiter zentraler Datenspeicher
- 60: Mautzentrale

## Patentansprüche

1. Positionsdatenübermittlungssystem, umfassend
eine Mehrzahl von jeweils von einem Fahrzeug (20) mitgeführten Fahrzeugeinrichtungen (10), die jeweils
- wenigstens einen dezentralen Prozessor (11) zum Verarbeiten von Daten,
- wenigstens einen dezentralen Datenspeicher (16, 17, 18b) zum zumindest zeitweisen Speichern von Daten und
- wenigstens eine dezentrale Kommunikationseinrichtung (13) zum dezentralseitigen Versand und Empfang von Daten
aufweisen,
und
wenigstens eine zentrale Datenverarbeitungseinrichtung (50) mit
- wenigstens einem zentralen Prozessor (51) zum Verarbeiten von Daten,
- wenigstens einem zentralen Datenspeicher (56, 57) zum zumindest zeitweisen Speichern von Daten und
- wenigstens einer zentralen Kommunikationseinrichtung (53) zum zentralseitigen Empfang und Versand von Daten,
wobei
jede Fahrzeugeinrichtung (10) ausgebildet ist,
a) Positionsdaten von mehreren zeitlich aufeinanderfolgend bestimmten Positionen ihres jeweiligen Fahrzeugs (20) mittels des dezentralen Prozessors (11) aufgrund von in der Fahrzeugeinrichtung (10) gespeicherten positionsdatenspezifischen Anweisungen zu empfangen, zu erzeugen und/ oder zu verarbeiten und zumindest zeitweise in dem dezentralen Datenspeicher (16, 17, 18b) zu speichern, und
b) in dem dezentralen Datenspeicher (16, 17, 18b) zumindest zeitweise gespeicherte Positionsdaten mittels der dezentralen Kommunikationseinrichtung (13) an die zentrale Datenverarbeitungseinrichtung (50) zu versenden,
und die zentrale Datenverarbeitungseinrichtung (50) ausgebildet ist,
c) jeweils von einer Fahrzeugeinrichtung (10) versendete Positionsdaten zentralseitig mittels der zentralen Kommunikationseinrichtung (53) zu empfangen und zumindest bis zu einer Verarbeitung durch den zentralen Prozessor (51) im zentralen Datenspeicher (56, 57) zu speichern,
d) die empfangenen Positionsdaten mittels des zentralen Prozessors (51) zu verarbeiten und wenigstens ein aus der Verarbeitung der empfangenen Positionsdaten resultierendes Verarbeitungsergebnis zu erzeugen,
**dadurch gekennzeichnet, dass**
jede Fahrzeugeinrichtung (10) ausgebildet ist,
e) zu wenigstens einem definierten Anlass wenigstens eine für die dezentrale Speicherauslastung ihres jeweiligen dezentralen Datenspeichers (16, 17, 18b) indikative dezentrale Statusinformation mittels der dezentralen Kommunikationseinrichtung (13) an die zentrale Datenverarbeitungseinrichtung (50) zu versenden,
die zentrale Datenverarbeitungseinrichtung (50) ausgebildet ist,
f) die dezentrale Statusinformation von der jeweiligen Fahrzeugeinrichtung (10) zu empfangen,
g) wenigstens eine für die zentrale Auslastung der zentralen Datenverarbeitungseinrichtung (50) indikative zentrale Statusinformation zu erzeugen,
h) anhand der von einer jeweiligen Fahrzeugeinrichtung (10) empfangenen dezentralen Statusinformation und der erzeugten zentralen Statusinformation einen Umfang an von der jeweiligen Fahrzeugeinrichtung (10) an die zentrale Datenverarbeitungseinrichtung (50) zu übermittelnden Positionsdaten zu bestimmen,
und
i) eine Übermittlungsanweisung mit dem bestimmten Umfang an die jeweilige Fahrzeugeinrichtung (10) zu versenden, von der sie die dezentrale Statusinformation empfangen hat,
und schließlich jede Fahrzeugeinrichtung (10) ausgebildet ist,
j) die Übermittlungsanweisung von der zentralen Datenverarbeitungseinrichtung (50) mittels der dezentralen Kommunikationseinrichtung (13) zu empfangen und
k) von der dezentralen Menge an in ihrem jeweiligen dezentralen Datenspeicher (16, 17, 18b) zum Versand an die zentrale Datenverarbeitungseinrichtung (50) gespeicherten Positionsdaten den in der empfangenen Übermittlungsanweisung spezifizierten Umfang mittels der dezentralen Kommunikationseinrichtung (13) an die zentrale Datenverarbeitungseinrichtung (50) zu versenden.

2. Positionsdatenübermittlungssystem nach Anspruch 1
**dadurch gekennzeichnet, dass**
jede Fahrzeugeinrichtung (10) ausgebildet ist,
- zu dem wenigstens einen definierten Anlass wenigstens eine dezentrale Statusinformation mittels der dezentralen Kommunikationseinrichtung (13) an die zentrale Datenverarbeitungseinrichtung (50) zu versenden, die für die dezentrale Speicherauslastung ihres jeweiligen dezentralen Datenspeichers (16, 17,18b) hinsichtlich der Speicherung von zum Versand an die zentrale Datenverarbeitungseinrichtung (50) vorgesehenen Positionsdaten indikativ ist,
die zentrale Datenverarbeitungseinrichtung (50) ausgebildet ist, eine zentrale Statusinformation zu erzeugen, die für wenigstens eine zentrale Auslastung der zentralen Datenverarbeitungseinrichtung (50)
- hinsichtlich des Empfangs, der Speicherung und/ oder der Verarbeitung von zur Erzeugung des besagten Verarbeitungsergebnisses zu verarbeitenden Positionsdaten
und/oder
- hinsichtlich des Versands von positionsdatenspezifischen Anweisungen für die dezentralen Prozessoren (11) der Fahrzeugeinrichtungen (10) zum Empfang, zur Erzeugung, zur Verarbeitung, zur Speicherung und/ oder zum Versand von Positionsdaten von der zentralen Datenverarbeitungseinrichtung (50) an jede der Fahrzeugeinrichtungen (10)
indikativ ist.

3. Positionsdatenübermittlungssystem nach einem der vorhergehenden Ansprüche
**dadurch gekennzeichnet, dass**
die dezentrale Statusinformation abhängig ist von
i) der dezentralen Menge an in dem dezentralen Datenspeicher (16, 17, 18b) der jeweiligen Fahrzeugeinrichtung (10) zum Versand an die zentrale Datenverarbeitungseinrichtung (50) gespeicherten Positionsdaten
und/ oder
die zentrale Statusinformation abhängig ist von
i) der zentralen Kommunikationsauslastung der wenigstens einen zentralen Kommunikationseinrichtung (53) hinsichtlich der Menge mittels der zentralen Kommunikationseinrichtung (53) pro Zeiteinheit empfangenen oder zu empfangenden Positionsdaten,
ii) der zentralen Speicherauslastung des wenigstens einen zentralen Datenspeichers (56, 57) der zentralen Datenverarbeitungseinrichtung (50) hinsichtlich der zentralen Menge an im zentralen Datenspeicher (56, 57) gespeicherten Positionsdaten,
iii) der zentralen Prozessorauslastung des wenigstens einen zentralen Prozessors (51) hinsichtlich der Menge an Positionsdaten, die der zentrale Prozessor (51) pro Zeiteinheit verarbeitet
und/ oder
iv) der zentralen Versandauslastung der zentralen Datenverarbeitungseinrichtung (50) hinsichtlich der Menge von mittels einer zentralen Kommunikationsrichtung der zentralen Datenverarbeitungseinrichtung (50) pro Zeiteinheit an die Fahrzeugeinrichtungen (10) zu versendenden positionsdatenspezifischen Anweisungen.

4. Positionsdatenübermittlungssystem nach einem der vorhergehenden Ansprüche,
**dadurch gekennzeichnet, dass**
die zentrale Datenverarbeitungseinrichtung (50) ausgebildet ist, den Umfang an von der jeweiligen Fahrzeugeinrichtung (10) an die zentrale Datenverarbeitungseinrichtung (50) zu übermittelnden Positionsdaten umso größer zu bestimmen, je kleiner die zentrale Auslastung der zentralen Datenverarbeitungseinrichtung (50) hinsichtlich des Empfangs, der Speicherung und/ oder der Verarbeitung der Positionsdaten und/ oder je größer die dezentrale Speicherauslastung des jeweiligen dezentralen Datenspeichers (16, 17, 18b) hinsichtlich der Speicherung von zum Versand an die zentrale Datenverarbeitungseinrichtung vorgesehenen gespeicherten Positionsdaten ist.

5. Positionsübermittlungssystem nach einem der vorhergehenden Ansprüche,
**dadurch gekennzeichnet, dass**
die zentrale Datenverarbeitungseinrichtung (50) ausgebildet ist, den Umfang zu Null zu bestimmen, wenn
- die zentrale Auslastung der zentralen Datenverarbeitungseinrichtung (50), von der die erste zentrale Statusinformation abhängig ist, eine vorbestimmte zentrale Grenzauslastung überschreitet
und/ oder
- die dezentrale Speicherauslastung des jeweiligen dezentralen Datenspeichers (16, 17, 18b), von der die dezentrale Statusinformation abhängig ist, eine vorbestimmte dezentrale Speichergrenzauslastung nicht überschreitet.

6. Positionsübermittlungssystem nach einem der vorhergehenden Ansprüche,
**dadurch gekennzeichnet, dass**
die zentrale Datenverarbeitungseinrichtung (50) ausgebildet ist, den Umfang zur gesamten Menge der in der Fahrzeugeinrichtung (10) zur Versendung an die zentrale Datenverarbeitungseinrichtung (10) gespeicherten Positionsdaten zu bestimmen, wenn
- die zentrale Auslastung der zentralen Datenverarbeitungseinrichtung (50), von der die zentrale Statusinformation abhängig ist, eine vorbestimmte zentrale Grenzauslastung nicht überschreitet
und/ oder
- die dezentrale Speicherauslastung des jeweiligen dezentralen Datenspeichers (16, 17, 18b), von der die dezentrale Statusinformation abhängig ist, eine vorbestimmte dezentrale Speichergrenzauslastung überschreitet.

7. Positionsdatenübermittlungssystem nach einem der vorhergehenden Ansprüche,
**dadurch gekennzeichnet, dass**
der definierte Anlass für den Versand der dezentralen Statusinformation
i) das Überschreiten einer vorbestimmten Höchstzahl an wiederholten Versuchen der jeweiligen Fahreinrichtung (10) nach Ablauf einer vorbestimmten Zeitdauer seit einem vorhergehenden erfolglosen Versuch der jeweiligen Fahrzeugeinrichtung (10) ist, von der zentralen Datenverarbeitungseinrichtung (50) eine Übermittlungsanweisung zur Übermittlung eines von Null verschiedenen Umfangs der dezentralen Menge an in der jeweiligen Fahrzeugeinrichtung (10) zur Versendung an die zentrale Datenverarbeitungseinrichtung (50) gespeicherten Positionsdaten an die zentralen Datenverarbeitungseinrichtung (50) zu erhalten,
ii) eine von der jeweiligen Fahrzeugeinrichtung (10) detektierte Störung der jeweiligen Fahrzeugeinrichtung (10) oder des Empfangs von zur Positionsbestimmung dienlichen Signalen,
iii) das Befahren eines vorbestimmten Gebietes, wobei das Befahren eines vorbestimmten Gebietes von der jeweiligen Fahrzeugeinrichtung (10) durch Vergleich von Positionsdaten einer oder mehrerer bestimmter Positionen des Fahrzeugs mit in der jeweiligen Fahrzeugeinrichtung (10) gespeicherten geographischen Daten, die maßgeblich sind für das Erkennen des Befahrens des vorbestimmten Gebiet es, festgestellt wird,
iv) das Vorliegen einer vorgegebenen Anzahl von in dem dezentralen Datenspeicher (16, 17, 18b) gespeicherten Fahrspurdateien, die jeweils zur Übertragung an die zentrale Datenverarbeitungseinrichtung (50) vorgesehene Positionsdaten umfassen,
v) das Überschreiten eines vorbestimmten Speicherauslastungshöchstgrades eines Speicherauslastungsgrades, der dem Verhältnis der Menge an in der jeweiligen Fahrzeugeinrichtung (10) zum Versand an die zentrale Datenverarbeitungseinrichtung (50) gespeicherten Positionsdaten zu einem für die Speicherung von zum Versand an die zentrale Datenverarbeitungseinrichtung (50) vorgesehenen Positionsdaten reservierten oder zur Verfügung stehenden Speicherplatz in der Fahrzeugeinrichtung (10) entspricht,
vi) der Empfang einer vorbestimmten Nachricht in der jeweiligen Fahrzeugeinrichtung (10),
vii) das Einschalten oder die Inbetriebsetzung der jeweiligen Fahrzeugeinrichtung (10),
viii) die Wiederinbetriebsetzung der jeweiligen Fahrzeugeinrichtung (10) nach Ablauf einer vorbestimmten Zeitdauer seit der letzten Außerbetriebsetzung der jeweiligen Fahrzeugeinrichtung (10) oder der Ablauf einer vorbestimmten Zeitdauer seit der letzten Wiederinbetriebsetzung,
ix) das Überschreiten einer vorbestimmten Geschwindigkeit oder das Zurücklegen einer vorbestimmten Strecke, nachdem die vorbestimmte Geschwindigkeit innerhalb einer vorbestimmten Zeitdauer nicht überschritten wurde oder die vorbestimmte Strecke innerhalb vorbestimmten Zeitdauer nicht zurückgelegt wurde,
und/ oder
x) das Einleiten eines Ausschaltvorgangs zur Außerbetriebsetzung der Fahrzeugeinrichtung (10)
ist.

8. Positionsdatenübermittlungssystem nach einem der vorhergehenden Ansprüche
**dadurch gekennzeichnet, dass**
jede Fahrzeugeinrichtung (10) ausgebildet ist,
zu dem definierten Anlass zusätzlich zu der dezentralen Statusinformation eine dezentrale Anlässinformation über den Anlass für den Versand der dezentralen Statusinformation mittels der dezentralen Kommunikationseinrichtung (13) an die zentrale Datenverarbeitungseinrichtung (50) zu versenden,
und
die zentrale Datenverarbeitungseinrichtung (50) ausgebildet ist,
zusätzlich anhand der von der jeweiligen Fahrzeugeinrichtung (10) empfangenen dezentralen Anlassinformation den Umfang an von der Fahrzeugeinrichtung (10) zu übermittelnden Positionsdaten zu bestimmen.

9. Positionsdatenübermittlungssystem nach einem der vorhergehenden Ansprüche
**dadurch gekennzeichnet, dass**
jede Fahrzeugeinrichtung (10) ausgebildet ist,
zu dem definierten Anlass zusätzlich zu der dezentralen Statusinformation eine Fahrzeugeinrichtungsinformation, die indikativ für einen für die Speicherung von zum Versand an die zentrale Datenverarbeitungseinrichtung (50) vorgesehenen Positionsdaten reservierten oder zur Verfügung stehenden Speicherplatz in dem dezentralen Datenspeicher (16, 17, 18b) der jeweiligen Fahrzeugeinrichtung ist, mittels der dezentralen Kommunikationseinrichtung (13) an die zentrale Datenverarbeitungseinrichtung (50) zu versenden,
und
die zentrale Datenverarbeitungseinrichtung (50) ausgebildet ist,
zusätzlich anhand der von der jeweiligen Fahrzeugeinrichtung (10) empfangenen Fahrzeugeinrichtungsinformation den Umfang an von der Fahrzeugeinrichtung (10) zu übermittelnden Positionsdaten zu bestimmen.

10. Positionsdatenübermittlungssystem nach einem der vorhergehenden Ansprüche
**dadurch gekennzeichnet, dass**
die zentrale Datenverarbeitungseinrichtung (50) ausgebildet ist,
den Umfang zu Null zu bestimmen, wenn nicht ein die Bestimmung eines von Null verschiedenen Umfangs bedingendes Aufstockungskriterium erfüllt ist, welches auf das Eintreffen wenigstens einer vorbestimmten dezentralen Anlassinformation und/ oder wenigstens einer vorbestimmten Fahrzeugeinrichtungsinformation, die indikativ für einen für die Speicherung von zum Versand an die zentrale Datenverarbeitungseinrichtung (50) vorgesehenen Positionsdaten reservierten oder zur Verfügung stehenden Speicherplatz in dem dezentralen Datenspeicher (16, 17, 18b) der jeweiligen Fahrzeugeinrichtung (10) ist, lautet.

11. Positionsdatenübermittlungssystem nach einem der vorhergehenden Ansprüche
**dadurch gekennzeichnet, dass**
die zentrale Datenverarbeitungseinrichtung (50) ausgebildet ist,
den Umfang zur gesamten Menge der in der Fahrzeugeinrichtung (10) zur Versendung an die zentrale Datenverarbeitungseinrichtung (10) gespeicherten Positionsdaten zu bestimmen, wenn nicht ein die Bestimmung eines von der gesamten Menge verschiedenen Umfangs bedingendes Abschlagskriterium erfüllt ist, welches auf das ausbleibende Eintreffen wenigstens einer vorbestimmten dezentralen Anlassinformation und/ oder wenigstens einer vorbestimmten Fahrzeugeinrichtungsinformation, die indikativ für einen für die Speicherung von zum Versand an die zentrale Datenverarbeitungseinrichtung (50) vorgesehenen Positionsdaten reservierten oder zur Verfügung stehenden Speicherplatz in dem dezentralen Datenspeicher (16, 17, 18b) der jeweiligen Fahrzeugeinrichtung (10) ist, lautet.

12. Mautsystem mit einem Positionsdatenübermittlungssystem nach einem der vorhergehenden Ansprüche
**dadurch gekennzeichnet dass**,
jede Fahrzeugeinrichtung (10) und/ oder die zentrale Datenverarbeitungseinrichtung (50) ausgebildet sind, durch eine einen Vergleich mit für die Erkennung der Befahrung eines mautpflichtigen Streckenabschnitts maßgeblichen geographischen Daten umfassende Verarbeitung der Positionsdaten einer oder mehrerer bestimmter Positionen des Fahrzeugs (20) wenigstens ein Verarbeitungsergebnis zu erzeugen, welches die Kennung eines befahrenen mautpflichtigen Streckenabschnitts und/ oder eine Mautgebühr für das Befahren eines mautpflichtigen Streckenabschnitts beinhaltet.

13. Fahrzeugeinrichtung (10) zur Mitführung in oder an einem Fahrzeug (20) mit
- wenigstens einem dezentralen Prozessor (11) zum Verarbeiten von Daten,
- wenigstens einem dezentralen Datenspeicher (16, 17, 18b) zum zumindest zeitweisen: Speichern von Daten und
- wenigstens einer dezentralen Kommunikationseinrichtung (13) zum dezentralseitigen Versand und Empfang von Daten,
wobei
die Fahrzeugeinrichtung (10) ausgebildet ist,
a) Positionsdaten von mehreren zeitlich aufeinanderfolgend bestimmten Positionen ihres jeweiligen Fahrzeugs (20) mittels des dezentralen Prozessors (11) zumindest zeitweise in dem dezentralen Datenspeicher (16, 17, 18b) zu speichern, und
b) in dem dezentralen Datenspeicher (16, 17, 18b) zumindest zeitweise gespeicherte Positionsdaten mittels der dezentralen Kommunikationseinrichtung (13) an die zentrale Datenverarbeitungseinrichtung zu versenden,
**dadurch gekennzeichnet, dass**
die Fahrzeugeinrichtung (10) ausgebildet ist,
c) zu wenigstens einem definierten Anlass wenigstens eine von der dezentralen Speicherauslastung ihres dezentralen Datenspeichers (16, 17, 18b) abhängige dezentrale Statusinformation mittels der dezentralen Kommunikationseinrichtung (13) an die zentrale Datenverarbeitungseinrichtung (50) zu versenden,
d) eine Übermittlungsanweisung von der zentralen Datenverarbeitungseinrichtung (50) mittels der dezentralen Kommunikationseinrichtung (13) zu empfangen und
e) von der dezentralen Menge an in ihrem dezentralen Datenspeicher (16, 17, 18b) zum Versand an die zentrale Datenverarbeitungseinrichtung (50) gespeicherten Positionsdaten einen in der empfangenen Übermittlungsanweisung spezifizierten Umfang mittels der dezentralen Kommunikationseinrichtung (13) an die zentrale Datenverarbeitungseinrichtung (50) zu versenden.

14. Zentrale Datenverarbeitungseinrichtung (50) mit
- wenigstens einem zentralen Prozessor (51) zum Verarbeiten von Daten,
- wenigstens einem zentralen Datenspeicher (56, 57) zum zumindest zeitweisen Speichern von Daten und
- wenigstens einer zentralen Kommunikationseinrichtung (53) zum zentralseitigen Empfang und Versand von Daten,
wobei
die zentrale Datenverarbeitungseinrichtung (50) ausgebildet ist,
a) jeweils von einer Fahrzeugeinrichtung (10) versendete Positionsdaten zentralseitig mittels der zentralen Kommunikationseinrichtung (53) zu empfangen und zumindest bis zu einer Verarbeitung durch den zentralen Prozessor (51) im zentralen Datenspeicher (56, 57) zu speichern und
b) die empfangenen Positionsdaten mittels des zentralen Prozessors (51) zu verarbeiten und wenigstens ein aus der Verarbeitung der empfangenen Positionsdaten resultierendes Verarbeitungsergebnis zu erzeugen,
**dadurch gekennzeichnet, dass**
die zentrale Datenverarbeitungseinrichtung (50) ausgebildet ist,
c) eine von einer dezentralen Speicherauslastung eines dezentralen Datenspeichers (16, 17, 18b) der Fahrzeugeinrichtung (10) abhängige dezentrale Statusinformation von einer Fahrzeugeinrichtung (10) zu empfangen,
d) wenigstens eine von der zentralen Auslastung der zentralen Datenverarbeitungseinrichtung (50) abhängige zentrale Statusinformation zu erzeugen,
e) anhand der von einer jeweiligen Fahrzeugeinrichtung (10) empfangenen dezentralen Statusinformation und der erzeugten zentralen Statusinformation einen Umfang an von der jeweiligen Fahrzeugeinrichtung (10) an die zentrale Datenverarbeitungseinrichtung (50) zu übermittelnden Positionsdaten zu bestimmen,
und
f) eine Übermittlungsanweisung mit dem bestimmten Umfang an die Fahrzeugeinrichtung (10) zu versenden, von der sie die dezentrale Statusinformation empfangen hat.

15. Verfahren zur Übermittlung von Positionsdaten von einer Mehrzahl von jeweils von einem Fahrzeug (20) mitgeführten Fahrzeugeinrichtungen (10), die jeweils
- wenigstens einen dezentralen Prozessor (11) zum Verarbeiten von Daten,
- wenigstens einen dezentralen Datenspeicher (16, 17, 18b) zum zumindest zeitweisen Speichern von Daten und
- wenigstens eine dezentrale Kommunikationseinrichtung (13) zum dezentralseitigen Versand und Empfang von Daten
aufweisen,
an
wenigstens eine zentrale Datenverarbeitungseinrichtung (50) mit
- wenigstens einem zentralen Prozessor (51) zum Verarbeiten von Daten,
- wenigstens einem zentralen Datenspeicher (56, 57) zum zumindest zeitweisen Speichern von Daten und
- wenigstens einer zentralen Kommunikationseinrichtung (53) zum zentralseitigen Empfang und Versand von Daten,
wobei
jede Fahrzeugeinrichtung (10)
a) Positionsdaten von mehreren zeitlich aufeinanderfolgend bestimmten Positionen ihres jeweiligen Fahrzeugs (20) mittels des dezentralen Prozessors (11) aufgrund von in der Fahrzeugeinrichtung (10) gespeicherten positionsdatenspezifischen Anweisungen empfängt, erzeugt und/ oder verarbeitet und zumindest zeitweise in dem dezentralen Datenspeicher (16, 17, 18b) speichert, und
b) in dem dezentralen Datenspeicher (16, 17, 18b) zumindest zeitweise gespeicherte Positionsdaten mittels der dezentralen Kommunikationseinrichtung (13) an die zentrale Datenverarbeitungseinrichtung (50) versendet,
und die zentrale Datenverarbeitungseinrichtung (50)
c) jeweils von einer Fahrzeugeinrichtung (10) versendete Positionsdaten zentralseitig mittels der zentralen Kommunikationseinrichtung (53) empfängt und zumindest bis zu einer Verarbeitung durch den zentralen Prozessor (51) im zentralen Datenspeicher (56, 57) speichert,
d) die empfangenen Positionsdaten mittels des zentralen Prozessors (51) verarbeitet und wenigstens ein aus der Verarbeitung der empfangenen Positionsdaten resultierendes Verarbeitungsergebnis erzeugt,
**dadurch gekennzeichnet, dass**
jede Fahrzeugeinrichtung (10)
e) zu wenigstens einem definierten Anlass wenigstens eine von der dezentralen Speicherauslastung ihres jeweiligen dezentralen Datenspeichers (16, 17, 18b) abhängige dezentrale Statusinformation mittels der dezentralen Kommunikationseinrichtung (13) an die zentrale Datenverarbeitungseinrichtung (50) versendet,
die zentrale Datenverarbeitungseinrichtung (50)
f) die dezentrale Statusinformation von der jeweiligen Fahrzeugeinrichtung (10) empfängt,
g) wenigstens eine von der zentralen Auslastung der zentralen Datenverarbeitungseinrichtung (50) abhängige zentrale Statusinformation erzeugt,
h) anhand der von einer jeweiligen Fahrzeugeinrichtung (10) empfangenen dezentralen Statusinformation und der erzeugten zentralen Statusinformation einen Umfang an von der jeweiligen Fahrzeugeinrichtung (10) an die zentrale Datenverarbeitungseinrichtung (50) zu übermittelnden Positionsdaten bestimmt,
und
i) eine Übermittlungsanweisung mit dem bestimmten Umfang an die jeweilige Fahrzeugeinrichtung (10) versendet, von der sie die dezentrale Statusinformation empfangen hat,
und schließlich jeweils diejenige Fahrzeugeinrichtung (10), die die dezentrale Statusinformation an die zentrale Datenverarbeitungseinrichtung (50) gesendet hat,
j) die für sie bestimmte Übermittlungsanweisung von der zentralen Datenverarbeitungseinrichtung (50) mittels der dezentralen Kommunikationseinrichtung (53) empfängt und
k) von der dezentralen Menge an in ihrem jeweiligen dezentralen Datenspeicher (16, 17, 18b) zum Versand an die zentrale Datenverarbeitungseinrichtung (50) gespeicherten Positionsdaten den in der empfangenen Übermittlungsanweisung spezifizierten Umfang mittels der dezentralen Kommunikationseinrichtung (13) an die zentrale Datenverarbeitungseinrichtung (50) versendet.

## Claims

1. A positional data transfer system comprising
a plurality of on-board units (10) carried by a vehicle (20) in each case which each comprise
- at least one decentralized processor (11) for the processing of data,
- at least one decentralized data store (16, 17, 18b) for the at least temporary storage of data and
- at least one decentralized communications device (13) for the decentralized transmission and reception of data,
and
at least one centralized data processing device (50) having
- at least one centralized processor (51) for the processing of data,
- at least one centralized data store (56, 57) for the at least temporary storage of data and
- at least one centralized communications device (53) for the centralized reception and transmission of data,
wherein
each on-board unit (10) is configured
a) to receive, generate and/or process positional data from multiple positions determined successively in time of its respective vehicle (20) by means of the decentralized processor (11) on the basis of positional data-specific instructions stored in the on-board unit (10) and to store it at least temporarily in the decentralized data store (16, 17, 18b), and
b) to transmit positional data stored at least temporarily in the decentralized data store (16, 17, 18b) by means of the decentralized communications device (13) to the centralized data processing device (50),
and the centralized data processing device (50) is configured
c) to receive positional data transmitted by an on-board unit (10) in each case centrally by means of the centralized communications device (53) and to store it at least until it is processed by the centralized processor (51) in the centralized data store (56, 57),
d) to process the positional data received by means of the centralized processor (51) and to generate at least one processing outcome resulting from the processing of the positional data received,
**characterized in that**
each on-board unit (10) is configured
e) to transmit for at least one defined purpose at least one decentralized status notification indicative of the decentralized storage usage of its of its respective decentralized data store (16, 17, 18b) to the centralized data processing device (50) by means of the decentralized communications device (13),
the centralized data processing device (50) is configured
f) to receive the decentralized status notification from the respective on-board unit (10),
g) to generate at least one indicative central status notification for the central usage of the centralized data processing device (50),
h) to determine a volume of positional data be transferred from the respective on-board unit (10) to the centralized data processing device (50) with the help of the decentralized status notification received from a respective on-board unit (10) and the centralized status notification generated
and
i) to transmit a transfer instruction with the determined volume to the respective on-board unit (10) from which it has received the decentralized status notification,
and finally each on-board unit (10) is configured
j) to receive the transfer instruction from the centralized data processing device (50) by means of the decentralized communication device (13) and,
k) of the decentralized amount of positional data stored in its respective decentralized data store (16, 17, 18b) for transmission to the centralized data processing device (50), to transmit the volume specified in the transfer instruction received by means of the decentralized communication device (13) to the centralized data processing device (50).

2. The positional data transfer system according to claim 1
**characterized in that**
each on-board unit (10) is configured
- to transmit for the at least one defined purpose at least one decentralized status notification by means of the decentralized communication device (13) to the centralized data processing device (50) which is indicative of the decentralized storage usage of its decentralized data store (16, 17, 18b) in each case in relation to the storage of positional data provided for transmission to the centralized data processing device (50),
the centralized data processing device (50) is designed to generate centralized status notification which is indicative of at least one central usage of the centralized data processing device (50)
- in terms of the reception, storage and/or processing of positional data to be processed to produce the aforementioned processing outcome
and/or
- in terms of the transmission of positional data-specific instructions for the decentralized processors (11) of the on-board units (10) for the reception, generation, processing, storage and/or transmission of positional data from the centralized data processing device (50) to each of the on-board units (10).

3. The positional data transfer system according to one of the preceding claims,
**characterized in that**
the decentralized status notification is dependent on
i) the decentralized volume of positional data stored in the decentralized data store (16, 17, 18b) of the respective on-board unit (10) for transmission to the centralized data processing device (50)
and/or
the centralized status notification is dependent on
i) the centralized communication usage of the at least one centralized communication device (53) in relation to the amount of positional data received or to be received by means of the centralized communication device (53) per unit of time,
ii) the centralized storage usage of the at least one centralized data store (56, 57) of the centralized data processing device (50) in relation to the centralized amount of positional data stored in the centralized data store (56, 57),
iii) the centralized processor usage of the at least one centralized processor (51) in relation to the amount of positional data processed by the central processor (51) per unit of time
and/or
iv) the centralized transmission usage of the centralized data processing device (50) in relation to the number of positional data-specific instructions to be transmitted to the on-board units (10) by means of a centralized communication device of the centralized data processing device (50) per unit of time.

4. The positional data transfer system according to one of the preceding claims,
**characterized in that**
the centralized data processing device (50) is designed to determine the volume of positional data to be transferred by the respective on-board unit (10) to the centralized data processing device (50) as all the greater, the smaller the centralized usage of the centralized data processing device (50) in relation to the reception, storage and/or processing of the positional data and/or the greater the decentralized storage usage of the decentralized data store (16, 17, 18b) in each case in relation to the storage of stored positional data provided for transmission to the centralized data processing device.

5. The positional data transfer system according to one of the preceding claims,
**characterized in that**
the centralized data processing device (50) is designed to determine the volume at zero if
- the centralized usage of the centralized data processing device (50) on which the first centralized status notification is dependent exceeds a predetermined central threshold usage
and/or
- the decentralized storage usage of the respective decentralized data store (16, 17, 18b) on which the decentralized status notification depends does not exceed a predetermined decentralized storage threshold usage.

6. The positional data transmitting system according to one of the preceding claims,
**characterized in that**
the centralized data processing device (50) is configured to determine the volume in relation to the total amount of positional data stored in the on-board unit (10) for transmission to the centralized data processing device (10) if
- the centralized usage of the centralized data processing device (50) on which the centralized status notification depends exceeds a predetermined central threshold usage
and/or
- the decentralized storage usage of the respective decentralized data store (16, 17, 18b) on which the decentralized status notification depends exceeds a predetermined decentralized storage threshold usage.

7. The positional data transfer system according to one of the preceding claims,
**characterized in that**
the defined purpose of the transmission of the decentralized status notification
i) is the exceeding of a predetermined maximum number of repeated attempts by the respective on-board unit (10) after a predetermined period of time has elapsed following a previous unsuccessful attempt by the respective on-board unit (10) to obtain from the centralized data processing device (50) a transfer instruction for the transfer of a volume other than zero of the decentralized amount of positional data stored in the respective on-board unit (10) for transmission to the centralized data processing device (50) to the centralized data processing device (50),
ii) is a fault detected by the respective on-board unit (10) in the respective on-board unit (10) or the reception of signals used to determine positions,
iii) is the travelling over a predetermined area, wherein the travelling over a predetermined area is ascertained by the respective on-board unit (10) by comparing positional data of one or multiple determined positions of the vehicle with geographical data stored in the respective on-board unit (10) which is crucial to identifying travel over the predetermined area,
iv) is the existence of a predetermined number of lane files stored in the decentralized data store (16, 17, 18b) which each comprise positional data provided for transfer to the centralized data processing device (50),
v) is the exceeding of a predetermined maximum store usage level of a store usage level which corresponds to the ratio of the amount of positional data stored in the respective on-board unit (10) for transmission to the centralized data processing device (50) to a storage location in the on-board unit (10) which is reserved or available for the storage of positional data provided for transmission to the data processing device (50),
vi) is the reception of a predetermined notification in the respective on-board unit (10),
vii) is the starting or activation of the respective on-board unit (10),
viii) is the restarting of the respective on-board unit (10) after a predetermined period of time has elapsed since the last switch-off of the respective on-board unit (10) or the elapsing of a predetermined period of time since the last restart,
ix) is the exceeding of a predetermined speed or the coverage of a predetermined route after the predetermined speed has not been exceeded within a predetermined period of time or the predetermined route has not been. covered within a predetermined period of time,
and/or
x) the initiation of a switch-off process to shut down of the on-board unit (10).

8. The positional data transfer system according to one of the preceding claims,
**characterized in that**
each on-board unit (10) is configured
to transmit for the defined purpose, in addition to the decentralized status notification, decentralized purpose notification on the purpose of the transmission of the decentralized status notification by means of the centralized communication device (13) to the centralized data processing device (50),
and
the centralized data processing device (50) is configured
to determine, in addition with the help of the decentralized purpose notification received from the respective on-board unit (10), the volume of positional data to be transferred by the on-board unit (10).

9. The positional data transfer system according to one of the preceding claims,
**characterized in that**
each on-board unit (10) is configured
to transmit for the defined purpose, in addition to the decentralized status notification, an on-board unit notification which is indicative of a storage location in the decentralized data store (16, 17, 18a) of the respective on-board unit which is available or reserved for the storage of positional data provided for transmission to the centralized data processing device (50), by means of the decentralized communication device (13) to the centralized data processing device (50),
and
the centralized data processing device (50) is configured
to determine in addition with the help of the on-board unit notification received from the respective on-board unit (10) the volume of positional data to be transferred by the on-board unit (10).

10. The positional data transfer system according to one of the preceding claims,
**characterized in that**
the central data processing device (50) is configured
to determine the volume at zero if an accumulation criterion involving the determination of a volume other than zero is not satisfied, which accumulation criterion follows the occurrence of at least one predetermined decentralized purpose notification and/or at least one predetermined vehicle device notification which is indicative of a storage location in the decentralized data store (16, 17, 18b) of the respective on-board unit (10) which is reserved or available for the storage of positional data provided for transmission to the centralized data processing device (50).

11. The positional data transfer system according to one of the preceding claims,
**characterized in that**
the centralized data processing device (50) is configured
to determine the volume in relation to the total amount of positional data stored in the on-board unit (10) for transmission to the centralized data processing device (10), if a reduction criterion involving the determination of a volume that differs from the total amount is not satisfied, which reduction criterion follows the absence of at least one predetermined decentralized purpose notification and/or at least one predetermined on-board unit notification which is indicative of a storage location in the decentralized data store (16, 17, 18b) of the respective on-board unit (10) which is available or reserved for the storage of positional data provided for transmission to the centralized data processing device (50).

12. A toll system having a positional data transfer system according to one of the preceding claims,
**characterized in that**
each on-board unit (10) and/or the centralized data processing device (50) are designed to produce at least one processing outcome through a processing of the positional data of one or multiple determined positions of the vehicle (20) involving a comparison with geographical data crucial to identification of a route segment on which tolls are payable having been travelled through and/or includes a toll charge for travelling along a route segment on which tolls are payable.

13. An on-board unit (10) for carrying in or on a vehicle (20) having
- at least one decentralized processor (11) for processing data,
- at least one decentralized data store (16, 17, 18b) for the at least temporary storage of data and
- at least one decentralized communications device (13) for the decentralized transmission and reception of data,
wherein
the on-board unit (10) is configured
a) to store positional data from multiple positions determined successively in time of its respective vehicle (20) by means of the decentralized processor (11) at least temporarily in the decentralized data store (16, 17, 18b), and
b) to transmit positional data stored at least temporarily in the decentralized data store (16, 17, 18b) by means of the decentralized communications device (13) to the centralized data processing device,
**characterized in that**
the on-board unit (10) is configured
c) to transmit for at least one defined purpose at least one decentralized status notification, dependent on the decentralized store usage of its decentralized data store (16, 17, 18b) to the decentralized data processing device (50) by means of the decentralized communication device (13),
d) to receive a transfer instruction from the centralized data processing device (50) by means of the decentralized communication device (13) and
e) to transmit from the decentralized amount of positional data stored in its decentralized data store (16, 17, 18b) for transmission to the centralized data processing device (50) a volume specified in the transfer instruction received by means of the decentralized communication device (13) to the centralized data processing device (50).

14. A centralized data processing device (50) having
- at least one centralized processor (51) for processing data,
- at least one centralized data store (56, 57) for the at least temporary storage of data and
- at least one centralized communication device (53) for the centralized reception and transmission of data,
wherein
the centralized data processing device (50) is configured
a) to receive positional data transmitted by an on-board unit (10) in each case centrally by means of the centralized communication device (53) and to store it at least until it is processed by the central processor (51) in the centralized data store (56, 57) and
b) to process the positional data received by means of the centralized processor (51) and generate at least one processing outcome resulting from the processing of the positional data received,
**characterized in that**
the centralized data processing device (50) is configured
c) to receive a decentralized status notification from an on-board unit (10) which depends on a decentralized storage usage of a decentralized data store (16, 17, 18b) of the on-board unit (10),
d) to generate at least one central status notification which depends on the central usage of the decentralized data processing device (50),
e) to determine with the help of the decentralized status notification received from the respective on-board unit (10) and the centralized status notification generated a volume of positional data to be transferred by the respective on-board unit (10) to the centralized data processing device (50),
and
f) to transmit a transfer instruction with the determined volume to the on-board unit (10) from which it has received the decentralized status notification.

15. A method for transferring positional data from a plurality of on-board units (10) carried by a vehicle (20) in each case which each have
- at least one decentralized processor (11) for processing data,
- at least one decentralized data store (16, 17, 18b) for the at least temporary storage of data and
- at least one decentralized communication device (13) for the decentralized transmission and reception of data, to
at least one decentralized data processing device (50) having
- at least one centralized processor (51) for processing data,
- at least one centralized data store (56, 57) for the at least temporary storage of data and
- at least one centralized communications device (53) for the centralized reception and transmission of data, wherein
each on-board unit (10)
a) receives, generates and/or processes positional data from multiple positions determined successively in time of its respective vehicle (20) by means of the decentralized processor (11) on the basis of positional data-specific instructions stored in the on-board unit (10) and stores it at least temporarily in the decentralized data store (16, 17, 18b), and
b) transmits positional data stored at least temporarily in the decentralized data store (16, 17, 18b) by means of the decentralized communications device (13) to the centralized data processing device (50),
and the centralized data processing device (50)
c) receives positional data transmitted by an on-board unit (10) in each case centrally by means of the centralized communication device (53) and stores it at least until it is processed by the centralized processor (51) in the centralized data store (56, 57),
d) processes the positional data received by means of the centralized processor (51) and generates at least one processing outcome resulting from the processing of the positional data received,
**characterized in that**
each on-board unit (10)
e) transmits for at least one defined purpose at least one decentralized status notification which depends on the decentralized storage usage of its respective decentralized data store (16, 17, 18b) to the centralized data processing device (50) by means of the decentralized communication device (13),
the central data processing device (50)
f) receives the decentralized status notification from the respective on-board unit (10),
g) generates at least one central status notification which depends on the central usage of the data processing device (50),
h) determines a volume of positional data to be transferred from the respective on-board unit (10) to the centralized data processing device (50) with the help of the decentralized status notification received from a respective on-board unit (10) and the centralized status notification generated
and
i) transmits a transfer instruction with the determined volume to the respective on-board unit (10) from which it has received the decentralized status notification,
and finally the on-board device (10) in each case that has sent the decentralized status notification to the centralized data processing device (50),
j) receives the transfer instruction intended for it from the centralized data processing device (50) by means of the decentralized communication device (53) and
k) of the decentralized amount of positional data stored in its respective decentralized data store (16, 17, 18b) for transmission to the centralized data processing device (50), transmits the volume specified in the transfer instruction received by means of the decentralized communication device (13) to the centralized data processing device (50).

## Revendications

1. Système de transmission de données de position, comprenant
une pluralité de dispositifs de véhicule (10) emportés respectivement par un véhicule (20), qui présentent respectivement
- au moins un processeur décentralisé (11) pour le traitement de données,
- au moins une mémoire de données décentralisée (16, 17, 18b) pour la sauvegarde au moins temporaire de données et
- au moins un dispositif de communication décentralisé (13) pour l'envoi et la réception décentralisés de données,
et
au moins un dispositif de traitement de données centralisé (50) comportant
- au moins un processeur centralisé (51) pour le traitement de données,
- au moins une mémoire de données centralisée (56, 57) pour la sauvegarde du moins temporaire de données et
- au moins un dispositif de communication centralisé (53) pour l'envoi et la réception décentralisés de données, chaque dispositif de véhicule (10) étant conçu pour
a) recevoir, générer et/ou traiter des données de position de plusieurs positions définies successives de leur véhicule respectif (20) au moyen du processeur décentralisé (11) à partir d'instructions spécifiques aux données de position enregistrées dans le dispositif de véhicule (10) et les sauvegarder du moins temporairement dans la mémoire de données décentralisée (16, 17, 18b), et
b) dans la mémoire de données décentralisée (16, 17, 18b), envoyer des données de position sauvegardées du moins temporairement au moyen du dispositif de communication décentralisé (13) au dispositif de traitement de données centralisé (50),
et le dispositif de traitement de données centralisé (50) étant conçu pour
c) recevoir respectivement des données de position envoyées respectivement par un dispositif de véhicule (10) au niveau centralisé au moyen du dispositif de communication centralisé (53) et les sauvegarder du moins jusqu'à un traitement par le processeur centralisé (51) dans la mémoire de données centralisée (56, 57),
d) traiter les données de position reçues au moyen du processeur centralisé (51) et générer au moins un résultat de traitement découlant du traitement des données de position reçues,
**caractérisé en ce que**
chaque dispositif de véhicule (10) est conçu pour,
e) à au moins une occasion définie, envoyer au moins une information d'état décentralisée indicative de la charge de sauvegarde décentralisée de sa mémoire de données décentralisée respectives (16, 17, 18b) au moyen du dispositif de communication décentralisé (13) au dispositif de traitement de données centralisé (50),
le dispositif de traitement de données centralisé (50) est conçu pour
f) recevoir l'information d'état décentralisée de la part du dispositif de véhicule respectif (10),
g) générer au moins une information d'état centralisée indicative de la charge centralisée du dispositif de traitement de données centralisé (50),
h) définir, à partir de l'information d'état décentralisée reçue de la part d'un dispositif de véhicule respectif (10) et de l'information d'état centralisée générée, un volume de données de position à transmettre par le dispositif de véhicule respectif (10) au dispositif de traitement de données centralisé (50),
et
i) envoyer une instruction de transmission avec le volume défini au dispositif de véhicule respectif (10) duquel il a reçu l'information d'état décentralisée,
et chaque dispositif de véhicule (10) est enfin conçu pour
j) recevoir l'instruction de transmission du dispositif de traitement de données centralisé (50) au moyen du dispositif de communication décentralisé (13) et
k) envoyer, sur la quantité décentralisée de données de position enregistrées dans sa mémoire de données décentralisée respective (16, 17, 18b) pour envoi au dispositif de traitement de données centralisé (50), le volume spécifié dans l'instruction de transmission reçue au moyen du dispositif de communication décentralisé (13) au dispositif de traitement de données centralisé (50).

2. Système de transmission de données de position selon la revendication 1,
**caractérisé en ce que**
chaque dispositif de véhicule (10) est conçu pour,
- à l'au moins une occasion définie, envoyer au moyen du dispositif de communication décentralisé (13) au dispositif de traitement de données centralisé (50) au moins une information d'état décentralisée qui est indicative de la charge de sauvegarde décentralisée de sa mémoire de données décentralisée respective (16, 17, 18b) en vue de la sauvegarde de données de position prévues pour envoi au dispositif de traitement de données centralisé (50),
le dispositif de traitement de données centralisé (50) est conçu pour générer une information d'état centralisée qui est indicative d'au moins une charge centralisée du dispositif de traitement de données centralisé (50)
- en vue de l'envoi, de la sauvegarde et/ou du traitement de données de position à traiter pour la génération dudit résultat de traitement,
et/ou
- en vue de l'envoi d'instructions spécifiques aux données de position pour les processeurs décentralisés (11) des dispositifs de véhicule (10) pour la réception, pour la génération, pour le traitement, pour la sauvegarde et/ou pour l'envoi de données de position par le dispositif de traitement de données centralisé (50) à chacun des dispositifs de véhicule (10).

3. Système de transmission de données de position selon une des revendications précédentes,
**caractérisé en ce que**
l'information d'état décentralisée dépend de
i) la quantité décentralisée de données de position sauvegardées dans la mémoire de données décentralisée (16, 17, 18b) du dispositif de véhicule respectif (10) pour envoi au dispositif de traitement de données centralisé (50)
et/ou
l'information d'état centralisée dépend de
i) la charge de communication centralisée de l'au moins un dispositif de communication centralisé (53) en ce qui concerne la quantité de données de position reçues ou à recevoir au moyen du dispositif de communication centralisé (53) par unité horaire,
ii) la charge de sauvegarde centralisée de l'au moins une mémoire de données centralisée (56, 57) du dispositif de traitement de données centralisé (50) en ce qui concerne la quantité centralisée de données de position sauvegardées dans la mémoire de données centralisée (56, 57),
iii) la charge de processeur centralisée de l'au moins un processeur centralisé (51) en ce qui concerne la quantité de données de position que le processeur centralisé (51) traite par unité horaire
et/ou
iv) la charge d'envoi centralisée du dispositif de traitement de données centralisé (50) en ce qui concerne la quantité d'instructions spécifiques aux données de position à envoyer au moyen d'un dispositif de communication centralisé du dispositif de traitement de données centralisé (50) par unité horaire aux dispositifs de véhicule (10).

4. Système de transmission de données de position selon une des revendications précédentes,
**caractérisé en ce que**
le dispositif de traitement de données centralisé (50) est conçu pour définir le volume de données de position à transmettre par le dispositif de véhicule respectif (10) à l'unité de traitement de données centralisé (50) de manière à ce qu'il soit d'autant plus important que la charge centralisée du dispositif de traitement de données centralisé (50) est faible en ce qui concerne la réception, la sauvegarde et/ou le traitement des données de position et/ou que la charge de sauvegarde décentralisée de la mémoire de données décentralisée respective (16, 17, 18b) est élevé en ce qui concerne la sauvegarde de données de position sauvegardées prévues pour envoi au dispositif de traitement de données centralisé.

5. Système de transmission de position selon une des revendications précédentes,
**caractérisé en ce que**
le dispositif de traitement de données centralisé (50) est conçu pour définir le volume à zéro si
- la charge centralisée du dispositif de traitement de données centralisé (50) dont la première information d'état centralisée dépend dépasse une charge limite centralisée prédéfinie
et/ou
- la charge de sauvegarde décentralisée de la mémoire de données décentralisée respective (16, 17, 18b) dont l'information d'état décentralisée dépend ne dépasse pas une charge limite de sauvegarde décentralisée prédéfinie.

6. Système de détermination de position selon une des revendications précédentes,
**caractérisé en ce que**
le dispositif de traitement de données centralisé (50) est conçu pour définir le volume par rapport à la quantité totale de données de position enregistrées dans le dispositif de véhicule (10) pour envoi au dispositif de traitement de données centralisé (10) si
- la charge centralisée du dispositif de traitement de données centralisé (50) dont l'information d'état centralisée dépend ne dépasse pas une charge limite centralisée prédéfinie
et/ou
- la charge de sauvegarde décentralisée de la mémoire de données décentralisée respective (16, 17, 18b) dont l'information d'état décentralisée dépend dépasse une charge limite de sauvegarde décentralisée prédéfinie.

7. Système de transmission de données de position selon une des revendications précédentes,
**caractérisé en ce que**
l'occasion définie pour l'envoi de l'information d'état décentralisée est
i) le dépassement d'un nombre maximal prédéfini de tentatives répétées du dispositif de véhicule respectif (10), après écoulement d'une durée prédéfinie depuis une tentative insatisfaisante précédente du dispositif de véhicule respectif (10), d'obtenir de la part du dispositif de traitement de données centralisé (50) une instruction de transmission pour transmettre un volume différent de zéro de la quantité décentralisée de données de position sauvegardées dans le dispositif de véhicule respectif (10) pour envoi au dispositif de traitement de données centralisé (50) au dispositif de traitement de données centralisé (50),
ii) une anomalie détectée par le dispositif de véhicule respectif (10) du dispositif de véhicule respectif (10) ou de la réception de signaux servant à la définition de position,
iii) la circulation dans un secteur prédéfini, la circulation dans un secteur prédéfini étant constatée par le dispositif de véhicule respectif (10) par comparaison de données de position d'une ou plusieurs positions définies du véhicule avec des données géographiques sauvegardées dans le dispositif de véhicule respectif (10) et qui sont significatives pour la détection de la circulation dans le secteur prédéfini,
iv) la présence d'un nombre prédéfini de données de voie de circulation sauvegardées dans la mémoire de données décentralisée (16, 17, 18b) et qui comprennent des données de position prévues respectivement pour être transmises au dispositif de traitement de données centralisé (50),
v) le dépassement d'un degré maximal de charge de sauvegarde prédéfini d'un degré de charge de sauvegarde qui correspond au rapport entre la quantité de données de position sauvegardées dans le dispositif de véhicule respectif (10) pour envoi au dispositif de traitement de données centralisé (50) et un emplacement de mémoire réservé ou à disposition pour la sauvegarde de données de position prévues pour envoi au dispositif de traitement de données centralisé dans le dispositif de véhicule (10),
vi) la réception d'un message prédéfini dans le dispositif de véhicule respectif (10),
vii) l'activation ou la misé en marche du dispositif de véhicule respectif (10),
viii) la remise en marche du dispositif de véhicule respectif (10) après écoulement d'une durée prédéfinie depuis le dernier arrêt du dispositif de véhicule respectif (10) ou l'écoulement d'une durée prédéfinie depuis la dernière remise en marche,
ix) le dépassement d'une vitesse prédéfinie ou le fait d'avoir parcouru une distance prédéfinie après que la vitesse prédéfinie n'a pas été dépassée pendant une durée prédéfinie ou que la distance prédéfinie n'a pas été parcourue pendant une durée prédéfinie,
et/ou
x) l'initiation d'un processus de désactivation pour l'arrêt du dispositif de véhicule (10).

8. Système de transmission de données de position selon une des revendications précédentes,
**caractérisé en ce que**
chaque dispositif de véhicule (10) est conçu pour,
à l'occasion définie, envoyer, en plus de l'information d'état décentralisée, une information d'occasion décentralisée concernant l'occasion d'envoi de l'information d'état décentralisée au moyen du dispositif de communication décentralisé (13) au dispositif de traitement de données centralisé (50),
et
le dispositif de traitement de données centralisé (50) est conçu pour,
en plus, à partir de l'information d'occasion décentralisée reçue de la part du dispositif de véhicule respectif (10), déterminer le volume de données de position à transmettre par le dispositif de véhicule (10).

9. Système de transmission de données de position selon une des revendications précédentes,
**caractérisé en ce que**
chaque dispositif de véhicule (10) est conçu pour,
à l'occasion définie, envoyer, en plus de l'information d'état décentralisée, une information de dispositif de véhicule qui est indicative d'un emplacement de mémoire réservé ou à disposition pour la sauvegarde de données de position prévues pour envoi au dispositif de traitement de données centralisé (50) dans la mémoire de données décentralisée (16, 17, 18b) du dispositif de véhicule respectif au moyen du dispositif de communication décentralisé (13) au dispositif de traitement de données centralisé (50),
et que
le dispositif de traitement de données centralisé (50) est conçu pour,
en plus, à partir de l'information de dispositif de véhicule reçue de la part du dispositif de véhicule respectif (10), définir le volume de données de position à transmettre par le dispositif de véhicule (10).

10. Système de transmission de données de position selon une des revendications précédentes,
**caractérisé en ce que**
le dispositif de traitement de données centralisé (50) est conçu pour
définir le volume à zéro s'il n'est pas rempli un critère d'augmentation conditionnant la définition d'un volume différent de zéro qui est établi sur la base de l'arrivée d'au moins une information d'occasion décentralisée prédéfinie et/ou d'au moins une information de dispositif de véhicule prédéfinie qui est indicative d'un emplacement de mémoire réservé ou à disposition pour la sauvegarde de données de position prévues pour envoi au dispositif de traitement de données centralisé (50) dans la, mémoire de données décentralisée (16, 17, 18b) du dispositif de véhicule respectif (10).

11. Système de transmission de données de position selon une des revendications précédentes,
**caractérisé en ce que**
le dispositif de traitement de données centralisé (50) est conçu pour
définir le volume par rapport à la quantité totale des données de position sauvegardées dans le dispositif de véhicule (10) pour envoi au dispositif de traitement de données centralisé (10) s'il n'est pas rempli un critère de réduction conditionnant la définition d'un volume différent de la quantité totale et qui est établi sur la base de l'absence d'arrivée d'au moins une information d'occasion décentralisée prédéfinie et/ou d'au moins une information de dispositif de véhicule prédéfinie qui est indicative d'un emplacement de mémoire réservé ou à disposition pour la sauvegarde de données de position prévues pour envoi au dispositif de traitement de données centralisé (50) dans la mémoire de données décentralisée (16, 17, 18b) du dispositif de véhicule respectif (10).

12. Système de péage comportant un système de transmission de données de position selon une des revendications précédentes,
**caractérisé en ce que**
chaque dispositif de véhicule (10) et/ou le dispositif de traitement de données centralisé (50) sont conçus pour, par un traitement comprenant une comparaison avec des données géographiques significatives pour la détection de la circulation sur une section de distance sujette à péage des données de position d'une ou plusieurs positions définies du véhicule (20), générer au moins un résultat de traitement qui contient l'identifiant d'une section de distance parcourue sujette à péage et/ou des frais de péage pour la circulation sur une section de distance sujette à péage.

13. Dispositif de véhicule (10) à emporter dans ou sur un véhicule (20), comportant
- au moins un processeur décentralisé (11) pour le traitement de données,
- au moins une mémoire de données décentralisée (16, 17, 18b) pour la sauvegarde du moins temporaire de données,
- au moins un dispositif de communication décentralisé (13) pour l'envoi et la réception décentralisés de données, le dispositif de véhicule (10) étant conçu pour
a) sauvegarder des données de position de plusieurs positions définies se succédant dans le temps de son véhicule respectif (20) au moyen du processeur décentralisé (11) du moins temporairement dans la mémoire de données décentralisée (16, 17, 18b), et
b) dans la mémoire de données décentralisée (16, 17, 18b), envoyer des données de position sauvegardées du moins temporairement au moyen du dispositif de communication décentralisé (13) au dispositif de traitement de données centralisé,
**caractérisé en ce que**
le dispositif de véhicule (10) est conçu pour,
c) à au moins une occasion définie, envoyer au moins une information d'état décentralisée dépendant de la charge de sauvegarde décentralisée de sa mémoire de données décentralisée (16, 17, 18b) au moyen du dispositif de communication décentralisé (13) au dispositif de traitement de données centralisé (50),
d) recevoir une instruction de transmission de la part du dispositif de traitement de données centralisé (50) au moyen du dispositif de communication décentralisé (13) et
e) sur la quantité décentralisée de données de position sauvegardées dans sa mémoire de données décentralisée (16, 17, 18b) pour envoi au dispositif de traitement de données centralisé (50), envoyer un volume spécifié dans l'instruction de transmission reçue au moyen du dispositif de communication décentralisé (13) au dispositif de traitement de données centralisé (50).

14. Dispositif de traitement de données centralisé (50), comportant
- au moins un processeur centralisé (51) pour le traitement de données,
- au moins une mémoire de données centralisée (56, 57) pour la sauvegarde du moins temporaire de données et
- au moins un dispositif de communication centralisé (53) pour la réception et l'envoi centralisés de données, le dispositif de traitement de données centralisé (50) étant conçu pour
a) recevoir des données de position respectivement envoyées par un dispositif de véhicule (10) à un niveau centralisé au moyen du dispositif de communication centralisé (53) et les sauvegarder dans la mémoire de données centralisée (56, 57) au moins jusqu'à un traitement par le processeur centralisé (51) et
b) traiter les données de position reçues au moyen du processeur centralisé (51) et générer au moins un résultat de traitement découlant du traitement des données de position reçues,
**caractérisé en ce que**
le dispositif de traitement de données centralisé (50) est conçu pour
c) recevoir une information d'état décentralisée dépendant d'une charge de sauvegarde décentralisée d'une mémoire de données décentralisée (16, 17, 18b) du dispositif de véhicule (10) de la part d'un dispositif de véhicule (10),
d) générer au moins une information d'état centralisée dépendant de la charge centralisée du dispositif de traitement de données centralisé (50),
e) à partir de l'information d'état décentralisée reçue de la part d'un dispositif de véhicule respectif (10) et de l'information d'état centralisée générée à, définir un volume de données de position à transmettre par le dispositif de véhicule respectif (10) au dispositif de traitement de données centralisé (50),
et
f) envoyer une instruction de transmission comportant le volume défini au dispositif de véhicule (10) duquel il a reçu l'information d'état décentralisée.

15. Procédé de transmission de données de position d'une pluralité de dispositifs de véhicule (10) emportés respectivement par un véhicule (20) et qui présentent respectivement
- au moins un processeur décentralisé (11) pour le traitement de données,
- au moins une mémoire de données décentralisée (16, 17, 18b) pour la sauvegarde du moins temporaire de données et
- au moins un dispositif de communication décentralisé (13) pour l'envoi et la réception décentralisés de données à
au moins un dispositif de traitement de données centralisé (50) comportant
- au moins un processeur centralisé (51 pour le traitement de données,
- au moins une mémoire de données centralisée (56, 57) pour la sauvegarde du moins temporaire de données et
- au moins un dispositif de communication centralisé (53) pour la réception et l'envoi de données,
chaque dispositif de véhicule (10)
a) recevant, générant et/ou traitant et enregistrant au moins temporairement dans la mémoire de données décentralisée (16, 17, 18b) des données de position de plusieurs positions définies se succédant dans le temps de son véhicule respectif (20) au moyen du processeur décentralisé (11) sur la base d'instructions spécifiques aux données de position enregistrées dans le dispositif de véhicule (10), et
b) envoyant, dans la mémoire de données décentralisée (16, 17, 18b), des données de position sauvegardées du moins temporairement au moyen du dispositif de communication décentralisé (13) au dispositif de traitement de données centralisé (50),
et le dispositif de traitement de données centralisé (50)
c) recevant respectivement des données de position envoyées par un dispositif de véhicule (10) au niveau centralisé au moyen du dispositif de communication centralisé (53) et les sauvegardant du moins jusqu'à un traitement par le processeur centralisé (51) dans la mémoire de données centralisée (56, 57),
d) traitant les données de position reçues au moyen du processeur centralisé (51) et générant au moins un résultat de traitement découlant du traitement des données de position reçues,
**caractérisé en ce que**
chaque dispositif de véhicule (10),
e) envoie, à au moins une occasion définie, au moins une information d'état décentralisée dépendant de la charge de sauvegarde décentralisée de sa mémoire de données décentralisée respective (16, 17, 18b) au moyen du dispositif de communication décentralisé (13) au dispositif de traitement de données centralisé (50),
le dispositif de traitement de données centralisé (50)
f) reçoit l'information d'état décentralisée de la part du dispositif de véhicule respectif (10),
g) génère au moins une information d'état centralisée dépendant de la charge centralisée du dispositif de traitement de données centralisé (50),
h) définit, à partir de l'information d'état décentralisée reçue de la part d'un dispositif de véhicule respectif (10) et de l'information d'état centralisée générée, un volume de données de position à transmettre par le dispositif de véhicule respectif (10) au dispositif de traitement de données centralisé (50),
et
i) envoie une instruction de transmission comportant le volume défini au dispositif de véhicule respectif (10) duquel il a reçu l'information d'état décentralisée,
et, enfin, le dispositif de véhicule respectif (10) qui a envoyé l'information d'état décentralisée au dispositif de traitement de données centralisé (50)
j) reçoit l'instruction de transmission définie pour lui de la part du dispositif de traitement de données centralisé (50) au moyen du dispositif de communication décentralisé (53) et
k) envoie, sur la quantité décentralisée de données de position sauvegardées dans sa mémoire de données décentralisée respective (16, 17, 18b) pour envoi au dispositif de traitement de données centralisé (50), le volume spécifié dans l'instruction de transmission reçue au moyen du dispositif de communication décentralisé (13) au dispositif de traitement de données centralisé (50).
